(19) Europäisches Patentamt
European Patent Office
Office européen des brevets

(11) **EP 0 467 054 B1**

(12) **EUROPEAN PATENT SPECIFICATION**

(45) Date of publication and mention
of the grant of the patent:
**21.08.1996 Bulletin 1996/34**

(51) Int Cl.⁶: **H04N 7/30**

(21) Application number: **91108684.1**

(22) Date of filing: **28.05.1991**

(54) **Coding and decoding methods for a picture signal using overlapping blocks having variable block sizes and apparatuses therefor**

Kodier- und Dekodierverfahren für ein Bildsignal unter Verwendung von überlappenden Blöcken mit variablen Abmessungen und Vorrichtung dazu

Procédés de codage et de décodage pour un signal d'image utilisant des blocs chevauchants à dimensions variables et dispositif à cet effet

(84) Designated Contracting States:
**DE FR GB**

(30) Priority: **28.05.1990 JP 135272/90**

(43) Date of publication of application:
**22.01.1992 Bulletin 1992/04**

(73) Proprietor: **NEC CORPORATION**
**Tokyo (JP)**

(72) Inventor: **Mochizuki, Takashi,**
**c/o NEC Corporation**
**Minato-ku, Tokyo (JP)**

(74) Representative: **VOSSIUS & PARTNER**
**Postfach 86 07 67**
**81634 München (DE)**

(56) References cited:
**JP-A- 1 227 590**

- **9TH INTERNATIONAL CONFERENCE ON PATTERN RECOGNITION vol. 1, 14 November 1988, ROME, ITALY pages 613 - 617 , XP124108 I. DINSTEIN, ET AL. 'Variable Block-size Transform Image Coder'**
- **IEEE INTERNATIONAL CONFERENCE ON ACOUSTICS, SPEECH & SIGNAL PROCESSING vol. 3, 23 May 1989, GLASGOW (UK) pages 1854 - 1857 , XP89238 C.T. CHEN 'Adaptive Transform Coding via Quadtree- based Variable Blocksize DCT'**
- **IEEE TRANSACTIONS ON PATTERN ANALYSIS AND MACHINE INTELLIGENCE vol. 5, no. 3, May 1983, NEW YORK, USA pages 332 - 337 T.C. CHEN ET AL. 'An Image Transform Coding Scheme Based on Spatial Domain Considerations'**

**Description**

The present invention relates to methods and apparatuses for coding and decoding a picture signal or similar bidimensional signal block by block.

It is a common practice with the above-mentioned type of coding and decoding to divide a bidimensional signal into blocks each having a predetermined block size and then code and decode it on a block basis. The problem with this kind of coding and decoding scheme is that discontinuous changes in the signal, i.e., so-called block boundary artifacts occur at the boundaries of adjoining blocks. To reduce block boundary artifacts, a method which uses blocks having overlapping regions has been taught in JP-A-1 227 590 and by, for example, H. Schiller in "Overlapping block transform for image coding preserving equal number of samples and coefficients", SPIE, Visual communications and Image Processing '88, November 9-11. Schiller divides an image signal into blocks each having 2N x 2N pixels (N being a natural number) and overlapping adjacent blocks by half the block size in four directions which are perpendicular to the four sides thereof. An input pixel signal representative of 2N x 2N points is coded into a transformed signal representative of N x N points by transform equations which will be described later, and then the transformed signal is transmitted. The N x N transformed signal is transformed into a 2N x 2N inverse-transformed signal by an inverse procedure. Subsequently, this inverse-transformed signal and the inverse-transformed signals of the associated regions of the overlapping blocks are added to produce a decoded signal. A similar implementation is taught in H.S. Malvar et al "The LOT: Transform Coding Without Blocking Effects", IEEE TRANSACTIONS ON ACOUSTICS, SPEECH, AND SIGNAL PROCESSING, Vol. 37, No. 4, April 1989. On the other hand, it is known that when a bidimensional picture signal is divided into blocks and then coded and decoded, increasing the block size in regions where the change is insignificant and decreasing it in a region where the change is significant is successful in enhancing efficient coding and decoding. For example, Cheng-Tie Chen reported a unique procedure which splits a picture signal into non-overlapping bidimensional blocks of variable sizes and effects transform and coding in each of the blocks by Discrete Cosine Transform (DCT) in "Adaptive Transform Coding Via Quadtree-Based Variable Block Size DCT" at 1989 INTERNATIONAL CONFERENCE ON ACCOUSTICS, SPEECH, AND SIGNAL PROCESSING, Volume 3, MULTIDIMENSIONAL SIGNAL PROCESSING AUDIO & ELECTROACOUSTICS, held in Glasgow, May 23-26, 1989. Specifically, a picture signal is divided into M x M relatively large blocks, and then each blocks is subdivided into N x N (N = M/$2^i$; i being a natural number) unit subblocks whose number is the power of "4". Subsequently, the mean value of pixel levels is determined with each of four unit subblocks which constitute a 2N x 2N block. If the differences ($_4C_2$ = 6) among such unit subblocks are smaller than a predetermined value, the unit subblocks are combined into a 2N x 2N intermediate subblock and then dealt with as one of four 2N x 2N intermediate subblocks that constitute an 8N x 8N block. In this manner, the block size is sequentially increased so long as the conditions are satisfied. As a result, (i + 1) kinds of block sizes at maximum, i.e., N x N to M x M block sizes may be generated, depending on the degree to which the conditions are satisfied. Coding and decoding are effected with each of such blocks to enhance efficiency.

However, the Chen's coding and decoding scheme suffers from the previously stated block boundary artifacts since it divides an input signal into blocks such that the blocks do not overlap one another. The Schiller's method and Malvar's method both are not practicable unless blocks of the same size overlap, i.e., correct results of decoding are not achievable when blocks of different sizes are used.

It is therefore an object of the present invention to provide a coding and decoding method of the type splitting a bidimensional picture signal into picture blocks and coding and decoding on a block basis and capable of decoding an input signal correctly even when blocks overlap and have a variable block size.

It is another object of the present invention to provide a coding apparatus, decoding apparatus, and coding and decoding apparatus to which a coding and decoding method of the present invention is applied.

A method of coding and decoding a bidimensional signal of the present invention comprises the steps of, at a coding side, dividing a bidimensional input signal into rectangular blocks of a plurality of sizes according to block division information, providing window functions $h_{AM}$ (m) and $h_{BN}$ (n) on a direction and block size basis, calculating, assuming that a block of interest has an M x N size, transformed signal $X_p$ (k, i) from input signals $x_p$ (m, n) (m = 0, 1, ....., 2M-1; n = 0, 1, ....., 2N-1) by a transform equation:

$$X_p (k, i) = \sum_{m=0}^{2M-1} \sum_{n=0}^{2N-1} x_p(m, n)\, h_{AM}(m)\, h_{BN}(n)$$

$$\times \cos\{(2m + M + 1)(2k + 1)\, \pi / (4M)\}$$

$$\times \cos\{(2n + N + 1)(2i + 1)\, \pi / (4N)\}$$

(k = 0, 1, ...., M-1; i = 0, 1, ..., N-1)

and transmitting said block division information and the transformed signals to a decoding side, and at the decoding side providing window functions $f_{AM}$ (m) and $f_{BN}$ (n) corresponding to the window functions $h_{AM}$ (m) and $h_{BN}$ (n), respectively, calculating, when a block size of the transformed signals sent from the coding side is M x N, inverse-transformed signals $y_p$ (m, n) of 2M x 2N points from the transformed signals by using a transform equation:

$$y_p \ (m, \ n) \ = \ \sum_{k=0}^{M-1} \ \sum_{i=0}^{N-1} \ X_p(k, \ i) \ f_{AM}(m) \ f_{BN}(n)/(MN)$$

$$x \cos \{(2m + M + 1) (2k + 1) \, \pi \, / \, (4M)\}$$

$$x \cos \{(2n + N + 1) (2i + 1) \, \pi \, / \, (4N)\}$$

(m = 0, 1, ..., 2M-1; n = 0, 1, ..., 2N-1)
arranging the inverse-transformed signals according to the block division information sent from the coding side, and adding, in a portion where a plurality of blocks overlap, the inverse-transformed signals to produce a decoded signal.

The above-mentioned and other objects, features and advantages of the present invention will become more apparent from the following detailed description when taken in conjunction with the accompanying drawings, wherein:

Figs. 1a-1c and Fig. 2 show a specific conventional relation of overlapping blocks to one another;
Figs. 3a-3c show regions of an input signal used in calculating transformed signals in accordance with the present invention;
Figs. 4a-4c show window functions;
Figs. 5a-5d illustrate how a composite signal of overlapping regions of two blocks is calculated;
Fig. 6a shows blocks contacting from opposite sides with respect to a given line;
Fig. 6b illustrates how a composite signal of overlapping regions of two blocks is calculated;
Fig. 7 is a block diagram schematically showing apparatuses for coding and decoding a bidimensional signal embodying the present invention;
Figs. 8a and 8b each shows a specific block division principle;
Figs. 9a and 9b are block diagrams each schematically showing a specific construction of a decision circuit;
Fig. 10a is a block diagram schematically showing a specific construction of a linear transform circuit 2;
Fig. 10b is a schematic block diagram showing a specific construction of a linear transform circuit 3;
Fig. 11a is a block diagram showing a specific construction of a window function generating circuit 17 included in the linear transform circuit 2;
Fig. 11b is a block diagram schematically showing a specific construction of a window function generating circuit 27 included in the linear transform circuit 3;
Fig. 12 is a table listing a relation between the output of a data counter 51 and the output of a counter 34 shown in Fig. 11a;
Fig. 13 is a table listing the addresses of a ROM 35 shown in Fig. 11a and specific contents stored therein; and
Fig. 14 is a block diagram showing a specific construction of a synthesizing circuit 4 shown in Fig. 7.

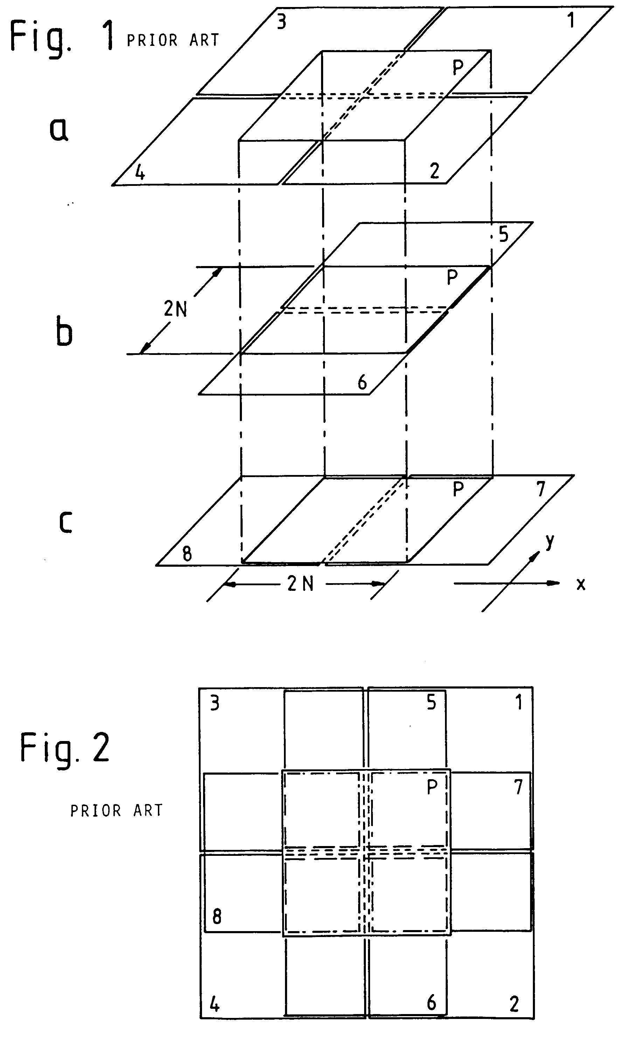

To better understand the present invention, a brief reference will be made to the conventional method taught by Schiller, shown in Figs. 1a-1c. The figures show only a given block of interest (block P) and other blocks (blocks 1-8) overlapping the block P, for the sake of simplicity of description. As shown, the block P is constituted by a 2N x 2N pixel signal and overlaps blocks 7 and 8 (Fig. 1c) and blocks 5 and 6 (Fig. 1b) in directions x and y, respectively, by half the block size each. Further, the block P overlaps blocks 1 and 3 which overlap the block 5 in the direction x by half the block size and blocks 2 and 4 which overlap the block 6 in the direction x by half the block size, over an N x N region (Fig. 1a). Hence, the block P overlaps with eight blocks in total. The blocks shown in Figs. 1a-1c appear as shown in Fig. 2 when seen from the above.

Assume that the input 2N x 2N pixel signal representative of the block P of interest is $x_p$ (m, n) (m = 0, 1, ..., 2N-1; n = 0, 1, ..., 2N-1). Then, the input 2N x 2N pixel signal is coded into an N x N transformed signal $X_p$ (k, i) by a predetermined window function W (n) (n = 0, 1, ..., 2N-1) and an equation:

$$X_p (k, i) = \sum_{m=0}^{2N-1} \sum_{n=0}^{2N-1} x_p (m, n) \cdot W(m) \cdot W(n)$$

$$x \cos \left\{ (2m + N + 1) \cdot (2k + 1) \, \pi / (4N) \right\}$$

$$x \cos \left\{ (2n + N + 1) \cdot (2i + 1) \, \pi / (4N) \right\}$$

$$\ldots \quad (1)$$

(k = 0, 1, ..., N-1; i = 0, 1, ..., N-1)

The transformed signal $X_p (k, i)$ is transmitted. The equation (I) corresponds to subsampling signals at 2N x 2N points in the frequency domain. For decoding, inverse-transformed signals are produced from the transformed signals $X_p$ (k, i) by the window function W (n) used for coding and an equation:

$$y_p (m, n) = \sum_{k=0}^{N-1} \sum_{i=0}^{N-1} X_p (k, i) \, W(m) \, W(n) / N^2$$

$$x \cos \left\{ (2m + N + 1) \, (2k + 1) \, \pi / (4N) \right\}$$

$$x \cos \left\{ (2n + N + 1) \, (2i + 1) \, \pi / (4N) \right\}$$

$$\ldots \quad (2)$$

(m = 0, 1, ..., 2N-1; n = 0, 1, ..., 2N-1)

The inverse-transformed signals of all the blocks which occupy the same space are added to produce a decoded signal. As shown in Fig. 2, any region inside the block P overlies four blocks. Hence, the inverse-transformed signals corresponding to the same regions of the overlapping four blocks are added to produce a decoded signal. Decoded signals at the block boundaries can also be produced if the inverse-transformed signals of the plurality of blocks are added, whereby block boundary artifacts are reduced. Since the blocks overlap, decoding is possible even when signals at 2N x 2N points are sampled at N x N points. Complete decoding (neglecting quantization errors at the time of coding and transmission) is achievable if the window function W(n) satisfies the following conditions:

Condition 1 - the window function is symmetrical in the right-and-left direction.
Condition 2 - the sum of power is always 1 (one) when turned back at the center of each of the symmetrical right and left regions, at points which are one-fourth of the entire window function from the right and left ends.

Expressing the above conditions in equations,

Condition 1: W(n) = W (2N - 1 - n) (n = 0, 1, ..., N - 1)

Condition 2: $W^2(n) + W^2(N - 1 - n) = 1$ (n = 0, 1, ..., N/2 - 1)

The problem with such a window function is that it cannot be used unless the blocks overlapping one another by half the block size are identical in size.

The present invention divides a bidimensional input picture signal into a plurality of blocks each having a particular size by use of some basis. Specifically, the basis to be used may be implemented as the previously mentioned Chen's method or any other method which is selected by comparing the amounts of code, the lower frequency range, power intensity, etc. Assuming that a block of interest (hereinafter referred to as a block P) has an M (horizontal) x N (vertical) block size, the present invention performs coding by using input signals representative of a 2M x 2N range centering around the block P. Assuming that input signals of the 2M x 2N points are $x_p$ (m, n) (m = 0, 1, ..., 2M-1; n = 0, 1, ..., 2N-1), then they are coded into coded signals $X_p$ (k, i) of M x N points, as follows:

$$X_p(k, i) = \sum_{m=0}^{2M-1} \sum_{n=0}^{2N-1} x_p(m, n) \, h_{AM}(m) \, h_{BN}(n)$$

$$\times \cos\left\{(2m + M + 1)(2k + 1)\,\pi/(4M)\right\}$$

$$\times \cos\left\{(2n + N + 1)(2i + 1)\,\pi/(4N)\right\}$$

$$(k = 0, 1, \ldots, M-1; \quad i = 0, 1, \ldots, N-1)$$

$$\ldots \ldots (3)$$

where $h_{AM}(m)$ and $h_{BN}(n)$ are window functions prepared beforehand on the basis of horizontal and vertical directions (A, B) and block sizes (M, N).

The transformed signal $X_p(k, i)$ is transmitted together with block division information which may be, for example, the origin and the horizontal and vertical sizes of the block. Regarding decoding, the present invention produces an inverse-transformed signal $y_p(m,n)$ of the transformed signal $X_p(k, i)$ by using window functions $f_{AM}(m)$ and $f_{BN}(n)$ prepared beforehand in association with the above-mentioned window functions $h_{AM}(m)$ and $h_{BN}(n)$ and an equation:

$$y_p(m, n) = \sum_{k=0}^{M-1} \sum_{i=0}^{N-1} X_p(k, i) \, f_{AM}(m) \, f_{BN}(n)/(MN)$$

$$\times \cos\left\{(2m + M + 1)(2k + 1)\,\pi/(4M)\right\}$$

$$\times \cos\left\{(2n + N + 1)(2i + 1)\,\pi/(4N)\right\}$$

$$(m = 0, 1, \ldots, 2M-1; \quad n = 0, 1, \ldots, 2N-1)$$

$$\ldots \ldots (4)$$

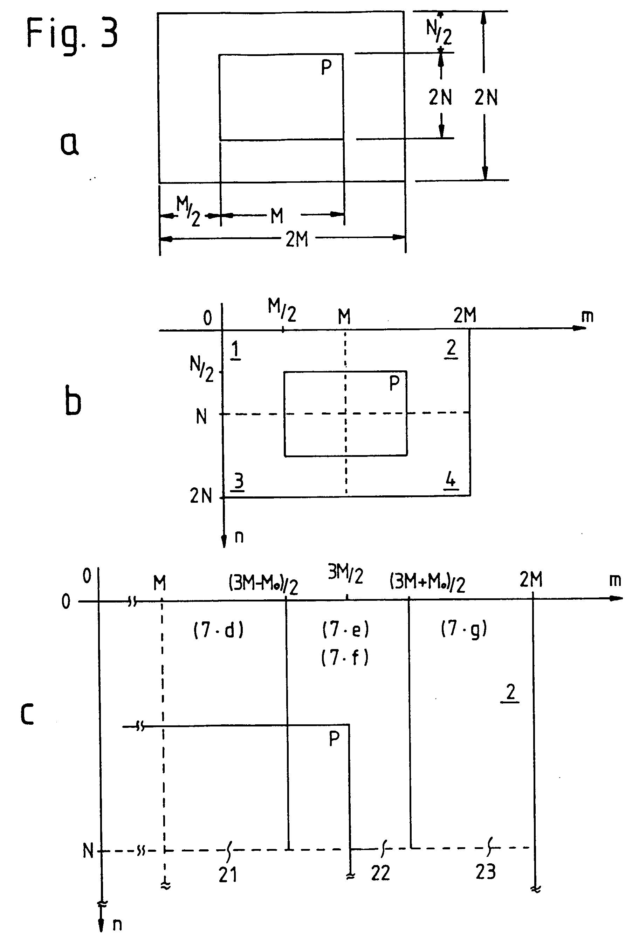

Subsequently, the inverse-transformed signals $y_p(m, n)$ are arranged on the basis of the block division information sent from the coding side. In each portion where a plurality of blocks overlap, the inverse-transformed signals are added to produce a decoded signal. As shown in Fig. 3b, let the 2M x 2N block be divided into four regions 1-4 for illustration. Assume that transformed signals $X_p(k, i)$ without any block broundary artifacts are decoded. Then, by substituting the equation (3) for the equation (4), the inverse-transformed signals $y_p(m, n)$ in the regions 1-4 are expressed by use of the input signals $x_p(m, n)$, as follows.

In the region 1 (m = 0, 1, ..., M-1; n = 0, 1, ..., N-1)

$$y_p(m, n) = x_p(m, n) \, h_{AM}(m) \, f_{AM}(m) \, h_{BN}(n) \, f_{BN}(n)$$

$$- x_p(M-1-m, n) \, h_{AM}(M-1-m) \, h_{AM}(m) \, h_{BN}(n) \, f_{BN}(n)$$

$$- x_p(m, N-1-n) \, h_{AM}(m) \, f_{AM}(m) \, h_{BM}(N-1-n) \, f_{BN}(n)$$

$$+ x_p(M-1-m, N-1-n) \, h_{AM}(M-1-m) \, f_{AM}(m)$$

$$\times h_{BN}(N-1-n) \, f_{BN}(n) \tag{5.a}$$

In the region 2 (m = M, M+1, ..., 2M-1; n = 0, 1, ..., N-1)

$$y_p(m, n) = x_p(m, n) \, h_{AM}(m) \, f_{AM}(m) \, h_{BN}(n) \, f_{BN}(n)$$

$$+ x_p(3M-1-m, n) \, h_{AM}(3M-1-m) \, f_{AM}(m) \, h_{BN}(n) \, f_{BN}(n)$$

$$- x_p (m, N-1-n) \, h_{AM}(m) \, f_{AM}(m) \, h_{BN}(N-1-n) \, f_{BN}(n)$$

$$- x_p(3M-1-m, N-1-n) \, h_{AM}(3M-1-m) \, f_{AM}(m)$$

$$x \, h_{BN}(N-1-n) \, f_{BN}(n) \qquad\qquad (5.b)$$

In the region 3 ($m = 0, 1, ..., M-1$; $n = N, N+1, ..., 2N-1$)

$$y_p (m, n) = x_p (m, n) \, h_{AM}(m) \, f_{AM}(m) \, h_{BN}(n) \, f_{BN}(n)$$

$$- x_p (M-1-m,n) \, h_{AM}(M-1-m) \, f_{AM}(m) \, h_{BN}(n) \, f_{BN}(n)$$

$$+ x_p (m,3N-1-n) \, h_{AM}(m) \, f_{AM}(m) \, h_{BN}(3N-1-n) \, f_{BN}(n)$$

$$- x_p (M-1-m, 3N-1-n) \, h_{AM}(M-1-m) \, f_{AM}(m)$$

$$x \, h_{BN}(3N-1-n) \, f_{BN}(n) \qquad\qquad (5.c)$$

In the region 4 ($m = M, M+1, ..., 2M-1$; $n = N, N+1, ..., 2N-1$)

$$y_p (m, n) = x_p (m, n) \, h_{AM}(m) \, f_{AM}(m) \, h_{BN}(n) \, f_{BN}(n)$$

$$+ x_p(3M-1-m,n) \, h_{AM}(3M-1-m) \, f_{AM}(m) \, h_{BN}(n) \, f_{BN}(n)$$

$$+ x_p(m,3N-1-n) \, h_{AM}(m) \, f_{AM}(m) \, h_{BN}(3N-1-n) \, f_{BN}(n)$$

$$+ x_p(3M-1-m, 3N-1-n) \, h_{AM}(3M-1-m) \, f_{AM}(m)$$

$$x \, h_{BN}(3N-1-n) \, f_{BN}(n) \qquad\qquad (5.d)$$

On the other hand, assume that the minimum block size is $M_0$ x $N_0$, that the window functions of the coding side which correspond to the horizontal direction $M_0$ and the vertical direction $N_0$ are $h_{AMO}(m)$ and $h_{BNO}(n)$, respectively and that the window functions at the decoding side are $f_{AMO}(m)$ and $f_{BNO}(n)$. Then, in order that input signals equally divided into minimum blocks may be regenerated, the following conditions should be satisfied: as to window functions $h_{AMO}(m)$ and $f_{AMO}(m)$ in horizontal direction

$$h_{AMO}(m) \, f_{AMO}(m) + h_{AMO}(m+M_0) \, f_{AMO}(m+M_0) = 1$$

$$(0 \leqq m < M_0) \qquad\qquad (6.a)$$

$$h_{AMO}(2M_0-1-m) \, f_{AMO}(m+M_0) = h_{AMO}(M_0-1-m) \, f_{AMO}(m)$$

$$(0 \leqq m < M_0) \qquad\qquad (6.b)$$

as to window functions $h_{BNO}(n)$ and $f_{BNO}(n)$

$$h_{BNO}(n) \, f_{BNO}(n) + h_{BNO}(n+N_0) \, f_{BNO}(n+N_0) = 1$$

$$(0 \leqq n < N_0) \qquad\qquad (6.c)$$

$$h_{BNO}(2N_0-1-n) \, f_{BNO}(n+N_0) = h_{BNO}(N_0-1-n) \, f_{BNO}(n)$$

$$(0 \leqq n < N_0) \qquad\qquad (6.d)$$

The window functions $h_{AM}(m)$, $h_{BN}(n)$, $f_{AM}(m)$ and $f_{BN}(n)$ for the other blocks should satisfy the following conditions as derived from the signal decoding conditions particular to the equally divided block size ($M_0$ x $N_0$) and the signal decoding conditions at a point where blocks of different sizes, especially a block of M x N size and a block of $M_0$ x $N_0$ size, adjoin each other:

$$h_{AM}(m) = f_{AM}(m) = 0 \qquad (m < M/2 - M_0/2) \qquad\qquad (7.a)$$

$$h_{AM}(m)\, f_{AM}(m)$$

$$= h_{AMO}(m - M/2 + M_0/2)\, f_{AMO}(m - M/2 + M_0/2) \tag{7.b}$$

$$(M/2 - M_0/2 \leqq m < M/2 + M_0/2)$$

$$h_{AM}(M-1-m)\, f_{AM}(m)$$

$$= h_{AMO}(M/2 + M_0/2 - 1 - m)\, f_{AMO}(m - M/2 + M_0/2) \tag{7.c}$$

$$(M/2 - M_0/2 \leqq m < M/2 + M_0/2)$$

$$h_{AM}(m)\, f_{AM}(m) = 1 \tag{7.d}$$

$$(M/2 + M_0/2 \leqq m < 3M/2 - M_0/2)$$

$$h_{AM}(m)\, f_{AM}(m)$$

$$= h_{AMO}(m - 3M/2 + 3M_0/2)\, f_{AMO}(m - 3M/2 + 3M_0/2) \tag{7.e}$$

$$(3M/2 - M_0/2 \leqq m < 3M/2 + M_0/2)$$

$$h_{AM}(3M-1-m)\, f_{AM}(m)$$

$$= h_{AMO}(3M/2 + 3M_0/2 - 1 - m)\, f_{AMO}(m - 3M/2 + 3M_0/2) \tag{7.f}$$

$$(3M/2 - M_0/2 \leqq m < 3M/2 + M_0/2)$$

$$h_{AM}(m) = f_{AM}(m) = 0 \qquad (m \geqq 3M/2 + M_0/2) \tag{7.g}$$

$$h_{BN}(n) = f_{BN}(n) = 0 \qquad (n < N/2 - N_0/2) \tag{7.h}$$

$$h_{BN}(n)\, f_{BN}(n)$$

$$= h_{BNO}(n - N/2 + N_0/2)\, f_{BNO}(n - N/2 + N_0/2) \tag{7.i}$$

$$(N/2 - N_0/2 \leqq n < N/2 + N_0/2)$$

$$h_{BN}(N-1-n)\, f_{BN}(n)$$

$$= h_{BNO}(N/2 + N_0/2 - 1 - n)\, f_{BNO}(n - N/2 + N_0/2) \tag{7.j}$$

$$(N/2 - N_0/2 \leqq n < N/2 + N_0/2)$$

$$h_{BN}(n)\, f_{BN}(n) = 1 \tag{7.k}$$

$$(N/2 + N_0/2 \leqq n < 3N/2 - N_0/2)$$

$$h_{BN}(n)\, f_{BN}(n)$$

$$= h_{BNO}(n - 3N/2 + 3N_0/2)\, f_{BNO}(n - 3N/2 + 3N_0/2) \tag{7.l}$$

$$(3N/2 - N_0/2 \leqq n < 3N/2 + N_0/2)$$

$$h_{BN}(3N-1-n)\, f_{BN}(n)$$

$$= h_{BNO}(3N/2 + 3N_0/2\text{-}1\text{-}n)\, f_{BNO}(n - 3N/2 + 3N_0/2) \qquad (7.m)$$

$$(3N/2 - N_0/2 \leqq n < 3N/2 + N_0/2)$$

$$h_{BN}(n) = f_{BN}(n) = 0 \qquad (7.n)$$

$$(n \geqq 3N/2 + N_0/2)$$

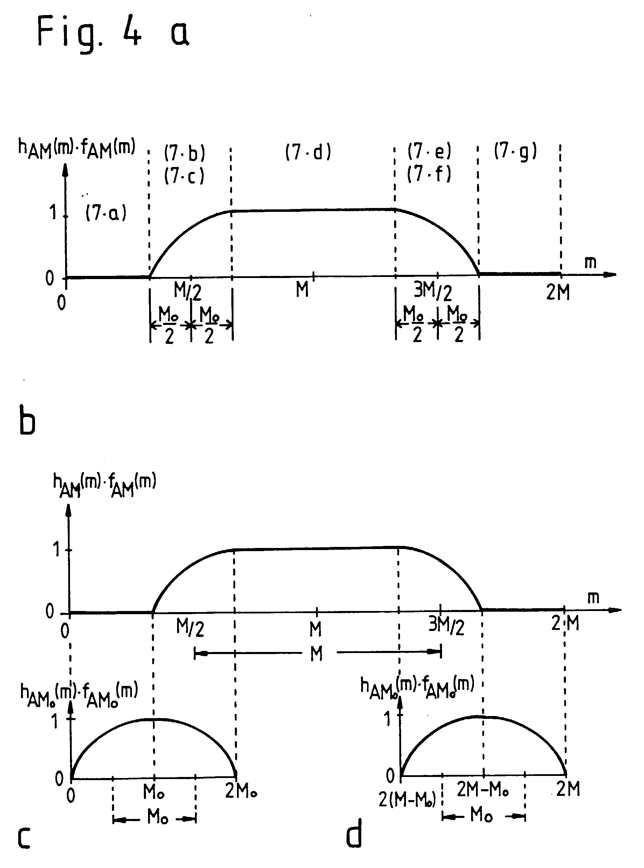

The above equations are representative of the conditions for an input signal to be reconstructed even when a block of any size adjoins the M x N block. Among such equations, (7.a) - (7.g) are associated with the window functions $h_{AM}$ (m) and $f_{AM}$(m) in the horizontal direction while (7.h) - (7.n) are associated with the window functions $h_{BN}$(n) and $f_{BN}$ (n) in the vertical direction. What each of the equations means will be described hereinafter. Since the equations (7.a) - (7.g) and the equations (7.h) - (7.n) are identical except for the replacement of M and N, let the following description concentrate on (7.a) - (7.g). Fig. 4a plots a waveform representative of sections where the product $h_{AM}(m) \cdot f_{AM}(m)$ of the window functions $h_{AM}$(m) and $f_{AM}$(m) in the horizontal direction and the equations (7.a) - (7.g) correspond. The equations (7.a) and (7.g) mean that the transformed signals in this region are not effected by the input signals and do not effect the decoded signals in the associated region. The equation (7.d) can be obtained from the equations (7.a) (7.g) and (6.a) with $M_0 = M$. The equations (7.b), (7.c), (7.e) and (7.f) indicate that the product of $h_{AM}$ and $f_{AM}$ is equal to the product at the same position of the window functions $h_{AM0}$ and $f_{AM0}$ associated with the minimum block size $M_0$ X $N_0$. Assume that two blocks of the minimum size adjoin an M x N block. In such a case, the products $h_{AM}(m) \cdot f_{AM}(m)$ of the horizontal window function $h_{AM}$(m) for coding and horizontal window function $f_{AM}$(m) for decoding in the individual blocks have a correlation shown in Figs. 4b-4d. As Fig. 4a indicates, $h_{AM}$(m) and $f_{AM}$(m) each has more than (M + 1) signal points which are not zero. Since these window functions correspond to a block whose size in the horizontal direction is M, that the block of interest has more than (M + 1) signal points which are not zero means that it overlaps other blocks. The above-description of the equations and window functions are also true with the window functions $h_{BN}$(n) and $f_{BN}$(n) associated with a block whose size in the vertical direction is N.

A procedure for producing an inverse-transformed signal $y_p$ (m, n) from a transformed signal $x_p$ (m, n) by use of the window functions $h_{AM}$(m), $h_{BN}$(n), $f_{AM}$(m) and $f_{BN}$(n) that satisfy the equations (7.a) - (7.n) will be described, taking the region 2 ($M \leq m \leq 2M - 1$, $0 \leq n \leq N - 1$) shown in Fig. 3b as an example. As shown in Fig. 4a, in this particular region, the horizontal window functions have three different conditions, depending on the position in the horizontal direction. Namely, there exist a region ($M \leq m \leq 1/2 (3M - M_0) - 1$) derived from the equation (7.d), a region ($1/2(3M - M_0) \leq m \leq 1/2(3M + M_0) - 1$) derived from the equations (7.e) and (7.f), and a region ($1/2(3M + M_0) \leq m \leq 2M - 1$) derived from the equation (7.g). While this region is subdivided into three regions with respect to the position in the vertical direction also, the following description will concentrate on the horizontal direction since the same description applies to both of the horizontal and vertical directions.

To begin with, in the region ($m = M, M+1, ..., 3M/2-M_0/2-1; n = 0, 1, ..., N-1$) (21, Fig. 3c):
from the equation (7.d)

$$h_{AM}(m)\, f_{AM}(m) = 1 \qquad (8.a)$$

from the equation (7.g)

$$h_{AM}(3M\text{-}1\text{-}m)\, f_{AM}(m) = 0 \qquad (8.b)$$

Hence, substituting for the equation (5.b)

$$y_p (m,n) = f_{BN}(n)\{x_p (m, n)\, h_{BN}(n) - x_p (m, N\text{-}1\text{-}n)\, h_{BN}(N\text{-}1\text{-}n)\} \qquad (9)$$

In the region ($m = 3M/2 - M_0/2, 3M/2 - M_0/2+1, ..., 3M/2 + M_0/2-1; n = 0, 1, ..., N-1$) (22, Fig. 3c):
from the equations (7.e) and (6.a)

$$h_{AM}(m)\, f_{AM}(m) = 1 - h_{AM0}(m\text{-}3M/2 + M_0/2)$$

$$x\, f_{AM0}(m\text{-}3M/2 + M_0/2) \qquad (10.a)$$

from the equations (7.f) and (6.b)

$$h_{AM}(3M\text{-}1\text{-}m)\, f_{AM}(m) = h_{AM0}(3M/2 + M_0/2\text{-}1\text{-}m)$$

$$x\, f_{AM0}(m\text{-}3M/2 + M_0/2) \qquad (10.b)$$

Therefore,

$$y_p (m, n) =$$

$$f_{BN}(n)\{1 - h_{AM0}(m - 3M/2 + M_0/2)\, f_{AM0}(m - 3M/2 + M_0/2)\}$$

$$x\{x_p(m, n)\, h_{BN}(n) - x_p (m, N-1-n)\, h_{BN}(N-1-n)\}$$

$$+ h_{AM0} (3M/2 + M_0/2 - 1 - m)\, f_{AM0}(m - 3M/2 + M_0/2)\, f_{BN}(n)$$

$$x\{x_p(3M-1-m, n)\, h_{BN} (n)$$

$$- x_p(3M-1-m, N-1-n)\, h_{BN}(N-1-n)\} \tag{11}$$

Finally, in the region ($m = 3M/2 + M_0/2, 3M/2 + M_0/2 + 1, ..., 2M-1; n = 0, 1, ..., N-1$) (23, Fig. 3c):
from the equation (7.g)

$$h_{AM}(m)\, f_{AM}(m) = h_{AM}(3M-1-m)\, f_{AM}(m) = 0$$

Hence,

$$y_p (m, n) = 0 \tag{12}$$

The relationship described with reference to Fig. 4a also holds true for the vertical window functions $h_{BN}(n)$ and $f_{BN}(n)$. Therefore, by applying the conditions of three regions to the vertical window functions $h_{BN}(n)$ and $f_{BN}(n)$ included in the equations (9) and (11) which are representative of inverse-transformed signals, as has been the case with the horizontal direction, it is possible to represent inverse-transformed signals $y_p(m, n)$ of a block of any size by the window functions $h_{AM0} (m)$, $f_{AM0}(m)$, $h_{BN0}(n)$ and $f_{BN0}(n)$ of the block of the minimum size ($M_0 \times N_0$).

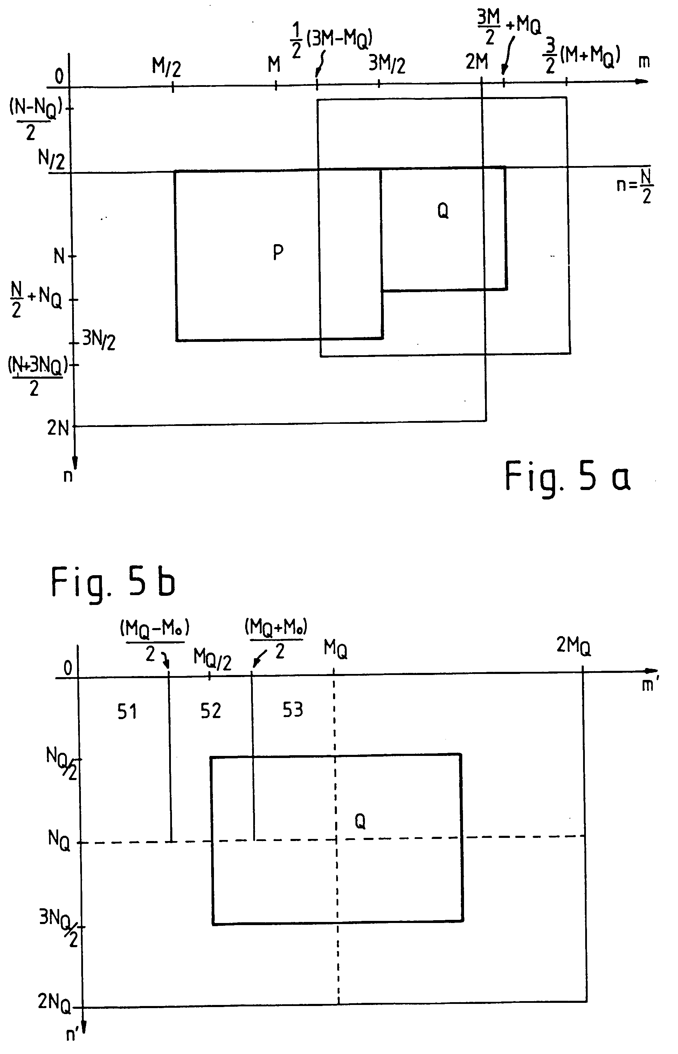

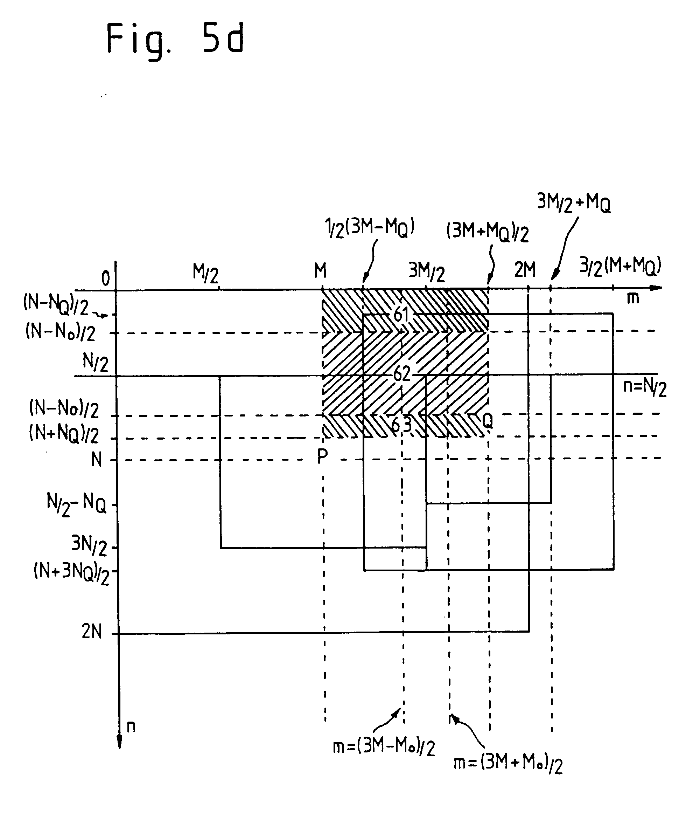

Fig. 5a shows a specific condition wherein a block Q of $M_Q \times N_Q$ size and having the same minimum value ($n = N/2$) in the vertical direction as the block P of M x N size is located at the right-hand side of the block P. The input signal $x_p (0, 0)$ of the block P is the origin of the axes since the input signals of 2M x 2N points are used to code a block of M x N size, as stated earlier. Likewise, the input signal $x_Q (0, 0)$ of the block Q is $\{(3M/2 - M_Q/2), (N/2 - N_Q/2)\}$. In the following description, a position in the block Q will be represented by coordinates ($m', n'$) relative to the origin $\{3M - M_Q/2, (N - N_Q)/2\}$. Hence, $x_p (m, n)$ and $x_Q (m', n')$ are related as follows:

$$x_Q (m', n') = x_p (m' - M_Q/2 + 3M/2, n' - N_Q/2 + N/2) \tag{14}$$

$$(m' = 0, 1, ..., 2M_Q-1; n' = 0, 1, ..., 2N_Q-1)$$

In the region of the input signals (inverse-transformed signals) of the block Q, Fig. 5b, inverse-transformed signals $y_Q (m', n')$ in the upper left zone ($m' = 0, 1, ..., M_Q-1; n' = 0, 1, ..., N_Q-1$), for example, are produced as follows. The inverse-transformed signals of the block Q can be represented by the equations (5.a) - (5.d) if m, n, M, N, $x_p$, $y_p$, $h_{AM}$, $f_{AM}$, $h_{BN}$ and $f_{BN}$ of the equations are replaced with m', n', $M_Q$, $N_Q$, $x_Q$, $y_Q$, $h_{AMQ}$, $f_{AMQ}$, $h_{BNQ}$ and $f_{BNQ}$. Therefore, by using the equation (5.a),

$$y_Q (m', n')$$

$$= x_Q (m', n')\, h_{AMQ}(m')\, f_{AMQ}(m')\, h_{BNQ}(n')\, f_{BNQ}(n')$$

$$- x_Q (M_Q-1-m', n')\, h_{AMQ}(M_Q-1-m')$$

$$x\, f_{AMQ}(m')\, h_{BNQ}(n')\, f_{BNQ}(n')$$

$$- x_Q (m', N_Q-1-n')\, h_{AMQ}(m')\, f_{AMQ}(m')$$

$$x\, h_{BNQ}(N_Q-1-n')\, f_{BNQ} (n')$$

$$+ x_Q (M_Q-1-m', N_Q-1-n')$$

$$x\, h_{AMQ}(M_Q-1-m')\, f_{AMQ}(m')$$

$$x\, h_{BNQ}(N_Q-1-n')\, f_{BNQ}(n') \tag{15}$$

Assume that the window functions $h_{AMQ}$, $f_{AMQ}$, $h_{BNQ}$ and $f_{BNQ}$ satisfy equations (7.a') - (7.n') which has m', n', $M_Q$ and $N_Q$ in place of m, n, M and N of the equations (7.a) - (7.n). Let the equation (15) be solved with each of three zones 51-53, Fig. 5b, having different window function conditions. First, in the zone 51 (m' = 0,1, ..., $M_Q/2$ - $M_O/2$-1; n' = 0, 1, ..., $N_Q$-1), from the equation (7.a')

$$f_{AMQ}(m') = 0 \tag{16}$$

Substituting it for the equation (15)

$$y_Q(m', n') = 0 \tag{17}$$

In the zone 52 (m' = $M_Q/2$ - $M_O/2$, $M_Q/2$ - $2M_O/2$+1, ..., $M_Q/2$ + $M_O/2$-1; n' = 0, 1, ..., $N_Q$-1), from the equations (7.b') and (7.c')

$$h_{AMQ}(m')\, f_{AMQ}(m')$$

$$= h_{AMO}(m' - M_Q/2 + M_O/2)\, f_{AMO}(m' - M_Q/2 + M_O/2) \tag{18}$$

$$h_{AMQ}(M_Q-1-m')\, f_{AMQ}(m')$$

$$= h_{AMO}(M_Q/2 + M_O/2-1-m')\, f_{AMO}(m' - M_Q/2 + M_O/2) \tag{19}$$

Again, substituting it for the equation (15)

$$y_Q(m', n')$$

$$= h_{AMO}(m' - M_Q/2 + M_O/2)\, f_{AMO}(m' - M_Q/2 + M_O/2)\, f_{BNQ}(n')$$

$$x\, \{x_Q(m', n')\, h_{BNQ}(n')$$

$$- x_Q(m', N_Q-1-n')\, h_{BNQ}(N_Q-1-n')\}$$

$$- h_{AMO}(M_Q/2 + M_O/2-1-m')\, f_{AMO}(m' - M_Q/2 + M_O/2)$$

$$x\, f_{BNQ}(n')\, \{x_Q(M_Q-1-m', n')\, h_{BNQ}(n')$$

$$- x_Q(M_Q-1-m', N_Q-1-n')\, h_{BNQ}(N_Q-1-n')\}$$

$$= h_{AMO}(m' - M_Q/2 + M_O/2)\, f_{AMO}(m' - M_Q/2 + M_O/2)\, f_{BNQ}(n')$$

$$x\, \{x_p(m' - M_Q/2 + 3M/2, n' - N_Q/2 + N/2)\, h_{BNQ}(n')$$

$$- x_p(m' - M_Q/2 + 3M/2, N_Q/2 + N/2-1-n')\, h_{BNQ}(N_Q-1-n')\}$$

$$- h_{AMO}(M_Q/2 + M_O/2-1-m')$$

$$x\, f_{AMO}(m' - M_Q/2 + M_O/2)\, f_{BNQ}(n')$$

$$x\, \{x_p(M_Q/2 + 3M/2-1-m', n' - N_Q/2 + N/2)\, h_{BNQ}(n')$$

$$- x_p(M_Q/2 + 3M/2-1-m', N_Q/2 + N/2-1-n')$$

$$x\, h_{BNQ}(N_Q-1-n')\} \tag{20}$$

In the zone 53 (m' = $M_Q/2$ + $M_O/2$, $M_Q/2$ + $M_O/2$+1, ..., $M_Q$-1; n' = 0, 1, ..., $N_Q$-1),

$$h_{AMQ}(m')\, f_{AMQ}(m') = 1,$$

$$h_{AMQ}(M_Q-1-m')\, f_{AMQ}(m') = 0$$

Therefore

$$y_Q(m', n') = f_{BNQ}(n')\{x_Q(m', n') h_{BNQ}(n') - x_Q(m', N_Q-1-n') h_{BNQ}(N_Q-1-n')\}$$

$$= f_{BNQ}(n')\{x_p(m' - M_Q/2 + 3M/2, n, - N_Q/2 + N/2) h_{BNQ}(n')$$

$$- x_p(m' - M_Q/2 + 3M/2, N_Q/2 + N/2-1-n')$$

$$x\ h_{BNQ}(N_Q-1-n')\}$$

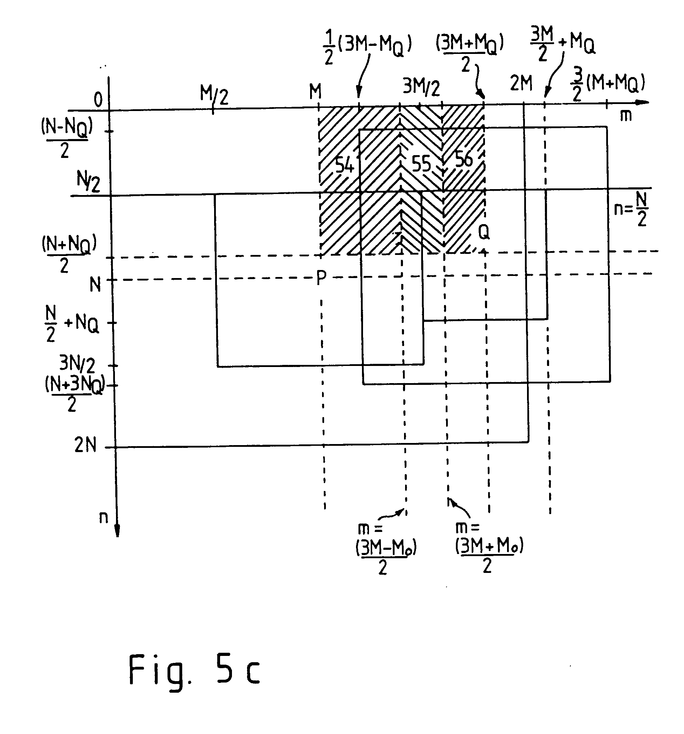

In the region extending from the upper right portion of the block P to the upper left portion of the block Q ($m = M$, $M+1, ..., (3M+M_Q)/2-1$; $n = 0, 1, ..., \min\{N, (N+N_Q)/2\}-1$), the inverse-transformed signals of the block P and those of the block Q are combined to produce a composite signal $\tilde{x}_{PQ}(m, n)$, as follows. In the zone $m \geq (3M+M_Q)/2$ (56, Fig. 5c), the inverse-transformed signal $y_p(m, n)$ is zero from the equation (13). In the zone $m \leq (3M-M_Q)/2$ (54, Fig. 5c), the inverse-transformed signal $y_Q(m', n')$ is zero from the equation (17). In the zone $N \leq (N-N_Q)/2$, the inverse-transformed signal $y_p(m, n) = y_Q(m', n')$ is zero. To begin with, the composite signal $\tilde{x}_{PQ}(m, n)$ particular to the zone 54 is determined from $y_Q(m', n') = 0$ and the equation (9):

$$\tilde{x}_{pQ}(m, n) = y_p(m, n)$$

$$= f_{BN}(n)\left\{ x_p(m, n)\ h_{BN}(n) - x_p(m, N-1-n)\ h_{BN}(N-1-n) \right\}$$

$$\dots\ (24)$$

In the zone 55 ($m = (3M-M_Q)/2, (3M-M_Q)/2+1, ..., (3M+M_Q)/2-1$; $n = 0, 1, ..., \min\{N, (N+N_Q)/2\}$), from the equations (11) and (20)

$$\tilde{x}_{pQ}(m,n) = y_p(m,n) + y_Q(m - 3M/2 + M_Q/2,\ n + N_Q/2 - N/2)$$

$$= f_{BN}(n)\left\{ 1-h_{AMO}(m-3M/2+M_O/2)\ f_{AMO}(m-3M/2+M_O/2) \right\}$$

$$x\left\{ x_p(m,n)\ h_{BN}(n) - x_p(m, N-1-n)\ h_{BN}(N-1-n) \right\}$$

$$+ \ h_{AMO}(3M/2 + M_O/2-1-m) \ f_{AMO}(m-3M/2 + M_O/2) \ f_{BN}(n)$$

$$x \left\{ x_p(3M-1-m,n) \ h_{BN}(n) \right.$$

$$\left. - \ x_p(3M-1-m, \ N-1-n) \ h_{BN}(N-1-n) \right\}$$

$$+ \ h_{AMO}(m-3M/2 + M_O/2) \ f_{AMO}(m-3M/2 + M_O/2)$$

$$x \ f_{BNQ}(n+N_Q/2-N/2)$$

$$x \left\{ x_p(m, \ n) \ h_{BNQ}(n+N_Q/2-N/2) \right.$$

$$\left. - \ x_p(m, \ N-1-n) \ h_{BNQ}(N_Q/2 + N/2-1-n) \right\}$$

$$- \ h_{AMO}(3M/2 + M_O/2-1-m) \ f_{AMO}(m-3M/2 + M_O/2)$$

$$x \ f_{BNQ}(n+N_Q/2-N/2)$$

$$x \left\{ x_p(3M-1-m,n) \ h_{BNQ}(n+N_Q/2-N/2) \right.$$

$$\left. - \ x_p(3M-1-m, \ N-1-n) \ h_{BNQ}(N_Q/2 + N/2-1-n) \right\}$$

$$= \ f_{BN}(n) \ \left\{ x_p(m,n) \ h_{BN}(n) \ - \ x_p(m,N-1-n) \ h_{BN}(N-1-n) \right\}$$

$$+ \ f_{AMO}(m-3M/2 + M_O/2)$$

$$x \left\{ x_p(3M-1-m,n) \ h_{AMO}(3M/2 + M_O/2-1-m) \right.$$

$$\left. - \ x_p(m, \ n) \ h_{AMO}(m-3M/2+M_O/2) \right\}$$

$$x \left\{ h_{BN}(n) \ f_{BN}(n) \ - \ h_{BNQ}(n+N_Q/2-N/2) \right.$$

$$\left. x \ f_{BNQ}(n+N_Q/2-N/2) \right\}$$

$$+ \ f_{AMO}(m-3M/2 + M_O/2)$$

$$x \left\{ x_p(m, \ N-1-n) \ h_{AMO}(m-3M/2 + M_O/2) \right.$$

$$\left. - \ x_p(3M-1-m, \ N-1-n) \ h_{AMO}(3M/2 + M_O/2-1-m) \right\}$$

$$x \left\{ h_{BN}(N-1-\dot{n}) \ f_{BN}(n) \right.$$

$$\left. - \ h_{BNQ}(N_Q/2+N/2-1-n) \ f_{BNQ}(n+N_Q/2-N/2) \right\}$$

$$.... \ (25)$$

In the equation (25), the first term is equal to the composite signal of the zone 54 (equation (24)). In the zone 56 ($m$ = 3M/2+$M_O$/2, 3M/2+$M_O$/2+1, ..., 3M/2+$M_O$/2-1; $n$ = 0, 1, ..., min{N, (N+$N_Q$)/2}-1), since $y_p(m, n)$ is zero as stated

earlier,

$$\widetilde{x}'_{PQ}\,(m,\ n)\ =\ y_Q\,(m-3M/2+M_Q/2,\ n+N_Q/2-N/2)$$

$$=\ f_{BNQ}\,(n+N_Q/2-N/2)\ \{\,x_p\,(m,\ n)\ h_{BNQ}\,(n+N_Q/2-N/2)$$

$$-\ x_p\,(m,\ N-1-n)\ h_{BNQ}\,(N_Q/2+N/2-1-n)\,\}$$

Regarding $h_{BN}(n)$ and $f_{BN}(n)$B from the equations (7.h) - (7.n) of window functions.

$$h_{BN}\,(n)\ \ f_{BN}\,(n)$$

$$=\begin{cases} 0 & (n\ =\ 0,\ 1,\ \ldots,\ N/2-N_O/2-1)\ \ldots\ (27.a) \\[2ex] h_{BNO}\,(n-N/2+N_O/2)\ \ f_{BNO}\,(n-N/2+N_O/2) & \ldots\ (27.b) \\ \quad (n\ =\ N/2-N_O/2,\ \ N/2-N_O/2+1,\ \ldots,\ N/2+N_O/2-1) \\[2ex] 1 & (n=N/2+N_O/2,\ N/2+N_O/2+1,\ \ldots,\ N-1)\ \ldots\ (27.c) \end{cases}$$

$$h_{BN}\,(N-1-n)\ \ f_{BN}\,(n)$$

$$=\begin{cases} 0 & (n\ =\ 0,\ 1,\ \ldots,\ N/2-N_O/2-1)\ \ldots\ (28.a) \\[2ex] h_{BNO}\,(N/2+N_O/2-1-n)\ \ f_{BNO}\,(n-N/2+N_O/2) & \ldots\ (28.b) \\ \quad (n\ =\ N/2-N_O/2,\ \ N/2-N_O/2+1,\ \ldots,\ N/2+N_O/2-1) \\[2ex] 0 & (n=N/2+N_O/2,\ N/2+N_O/2+1,\ \ldots,\ N-1)\ \ldots\ (28.c) \end{cases}$$

On the other hand, regarding $h_{BNQ}\,(n+N_Q/2-N/2)$ and $f_{BNQ}\,(n+N_Q/2-N/2)$,

$$h_{BNQ}\,(n')\ \ f_{BNQ}\,(n')$$

$$=\begin{cases} 0 & (n'\ =\ 0,\ 1,\ \ldots,\ (N_Q-N_O)/2-1)\ \ \ldots\ (29.a) \\[2ex] h_{BNO}\,\left(n'-\dfrac{N_Q}{2}+\dfrac{N_O}{2}\right)\ \ f_{BNO}\,\left(n'-\dfrac{N_Q}{2}+\dfrac{N_O}{2}\right) & \ldots\ (29.b) \\ \quad (n'=(N_Q-N_O)/2,\ (N_Q-N_O)/2+1,\ \ldots,\ (N_Q+N_O)/2-1) \\[2ex] 1 & (n'\ =\ (N_Q+N_O)/2,\ (N_Q+N_O)/2+1,\ \ldots,\ N_Q-1) \\ & \hspace{6cm}\ldots\ (29.c) \end{cases}$$

$$h_{BNQ}(N-1-n') \; f_{BNQ}(n')$$

$$= \begin{cases} 0 & (n' = 0, 1, \ldots, (N_Q-N_O)/2-1) & \ldots \; (30.a) \\[2ex] h_{BNO}(\frac{N_Q}{2} + \frac{N_O}{2} - 1 - n') \; f_{BNO}(n' - \frac{N_Q}{2} + \frac{N_O}{2}) \\[1ex] & \ldots \; (30.b) \\[2ex] (n' = (N_Q-N_O)/2, \; (N_Q-N_O)/2+1, \; \ldots, \; (N_Q+N_O)/2-1) \\[2ex] 0 & (n' = (N_Q+N_O)/2, \; (N_Q+N_O)/2+1, \; \ldots, \; N_Q-1) \\[1ex] & \ldots \; (30.c) \end{cases}$$

Therefore,

$$h_{BNQ}(n+N_Q/2-N/2) \; f_{BNQ}(n+N_Q/2-N/2)$$

$$= \begin{cases} 0 & (n = 0, 1, \ldots, N/2-N_O/2-1) & \ldots \; (31.a) \\[2ex] h_{BNO}(n-N/2+N_O/2) \; f_{BNO}(n-N/2+N_O/2) & \ldots \; (31.b) \\[2ex] (n = N/2-N_O/2, \; N/2-N_O/2+1, \; \ldots, \; N/2+N_O/2-1) \\[2ex] 1 & (n=N/2+N_O/2, \; N/2+N_O/2+1, \; \ldots, \; \frac{N}{2} + \frac{N_Q}{2} - 1) \\[1ex] & \ldots \; (31.c) \end{cases}$$

$$h_{BNQ}(N_Q/2 + N/2-1-n) \; f_{BNQ}(n + N_Q/2 - N/2)$$

$$= \begin{cases} 0 & (n = 0, 1, \ldots, N/2-N_O/2-1) & \ldots \; (32.a) \\[2ex] h_{BNO}(N/2+N_O/2-1-n) \; f_{BNO}(n-N/2+N_O/2) & \ldots \; (32.b) \\[1ex] (n=N/2-N_O/2, \; N/2-N_O/2+1, \; \ldots, \; N/2+N_O/2-1) \\[2ex] 0 & (n=N/2+N_O/2, \; N/2+N_O/2+1, \; \ldots, \; N/2 + N_Q/2-1) \\[1ex] & \ldots \; (32.c) \end{cases}$$

From the equations (24), (25) and (26), the composite signal $\tilde{x}_{PQ}(m, n)$ of the blocks P and Q in the zones 54-56, Fig. 5c, $(m = M, M+1, \ldots, (3M+M_Q)/2-1; \; n = 0, 1, \ldots, \min\{N, N/2 + N_Q/2\}-1)$

$$\widetilde{x}_{PQ} \ (m, \ n)$$

$$= \begin{cases} 0 \qquad (m=M, \ M+1, \ \ldots, \ (3M+M_Q)/2-1; \\[2mm] \qquad n = 0, \ 1, \ \ldots, \ N/2 - N_O/2-1) \qquad \ldots\ (33.a) \\[4mm] x_p(m, \ n) \ h_{BNO}(n-N/2+N_O/2) \ f_{BNO}(n-N/2+N_O/2) \\[2mm] \qquad - \ x_p(m, \ N-1-n) \ h_{BNO}(N/2 + N_O/2-1-n) \\[2mm] \qquad\quad x \ f_{BNO}(n-N/2+N_O/2) \qquad \ldots\ (33.b) \\[2mm] \qquad (m=M, \ M+1, \ \ldots, \ (3M+M_Q)/2-1; \\[2mm] \qquad n=N/2-N_O/2, \ N/2-N_O/2+1, \ \ldots, \ N/2+N_O/2-1) \\[4mm] x_p \ (m, \ n) \quad (m = M, \ M+1, \ \ldots, \ (3M+M_Q)/2-1; \\[2mm] \qquad n=N/2+N_O/2, \ N/2+N_O/2+1, \ldots, \ \min \ (N-1, \ N/2 + \dfrac{N_Q}{2} - 1) \\[2mm] \qquad\qquad\qquad\qquad\qquad\qquad \ldots\ (33.c) \ . \end{cases}$$

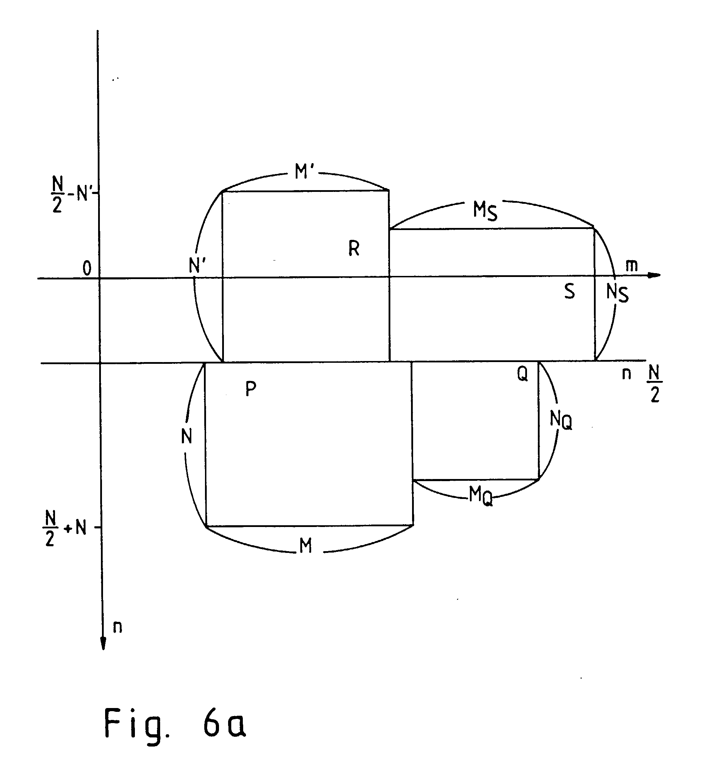

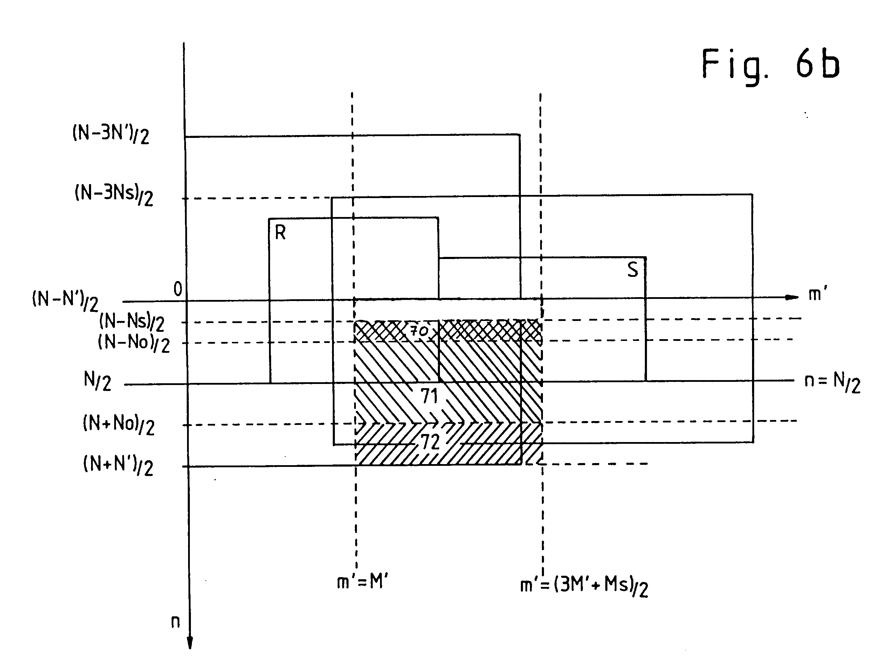

While the composite signals $\widetilde{x}_{PQ}$ of the blocks P and Q has been shown and described as being produced with the region divided into three zones in the horizontal direction, it is represented with no regard to the horizontal direction, as seen from the equations (33.a) - (33.c). The equations (33.a) - (33.c) do not include the terms that include $x_p(3M-1-m, n)$ and $x_p(3M-1-m, N-1-n)$, i.e., horizontal reverse-order components. Here, $x_p(3M-1-m, n)$ are $x_p(2M-1, n)$, $x_p(2M-2, n)$, ..., $x_p(M, n)$ in the range of m = M, M+1, ..., 2M-1 and are equal to a signal which is opposite in sequence to $x_p(m, n)$ (m = M, M+1, ..., 2M-1) in the horizontal direction. In this sense, $x_p(3M-1-m, n)$ are referred to as horizontal reverse-order components. Likewise, $x_p(3M-1-m, N-1-n)$ are the horizontal reverse-order components of $x_p(m, N-1-n)$ (m = M, M+1, ..., 2M-1) in the range of m = M, M+1, ..., 2M-1. On the other hand, the second term of the equation (33.b) that includes $x_p(m, N-1-n)$ is the vertical reverse-order component of $x_p(m, n)$, (n = $(N-N_O)/2$, $(N-N_O)/2+1$, ..., $(N+N_O)/2-1$). Next, as shown in Fig. 6a, assume two blocks R and S which adjoin the blocks P and Q in the opposite direction in contact with n = N/2. The blocks R and S are assumed to have sizes M' x N' and Ms x Ns, respectively. Fig. 6b shows the overlap of the blocks R and S with respect to an input signal. In Fig. 6b, the origin in the horizontal direction is located at the left end of the input signal of the block R for the sake of simplicity. The composite signal $\widetilde{x}_{RS}$ of the inverse-transformed signals of the blocks R and S is also attainable by use of the equation used to determine the composite signal $\widetilde{x}_{PQ}$ of the blocks P and Q, if m, M, N, $M_Q$ and $N_Q$ are resplaced with m', M', N', Ms and Ns, respectively. As a result, in the zone m' = M', M'+1, ..., (3M'+Ms)/2-1; n = max {(N-N')/2, (N-Ns)/2}, ..., (N+N')/2-2, (N+N')/2-1, the composite signal of the blocks R and S is expressed as:

$$\widetilde{x}_{RS}\ (m',\ n)$$

$$= \Bigg\{ \quad x_R(m',\ n) \qquad\qquad\qquad\qquad \dots\ (34.a)$$

$$(n=\max\Big\{(N-N')/2,\ (N-N_S)/2\Big\},\ \dots,\ (N-N_O)/2-1:$$

$$\text{(Fig. 6b, zone 70))}$$

$$x_R(m',\ n)\ h_{BNO}\ \Big(n - \frac{N}{2} + \frac{3N_O}{2}\Big)\ f_{BNO}\ \Big(n - \frac{N}{2} + \frac{3N_O}{2}\Big)$$

$$+\ x_R\ (m',\ N'-1-n)\ h_{BNO}\ \Big(\frac{N}{2} + \frac{3N_O}{2} - 1-n\Big)$$

$$f_{BNO}\ \Big(n - \frac{N}{2} + \frac{3N_O}{2}\Big) \qquad\qquad \dots\ (34.b)$$

$$(n=(N-N_O)/2,\ (N-N_O)/2+1,\ \dots,\ (N+N_O)/2-1:$$

$$\text{(Fig. 6b, zone 71))}$$

$$\qquad\qquad\qquad\qquad\qquad\qquad\qquad\qquad \dots\ (34.c)$$

$$0$$

$$(n=(N+N_O)/2,\ (N+N_O)/2+1,\ \dots,\ (N+N')/2-1:$$

$$\text{(Fig. 6b, zone 72))}$$

As the equations (34.a) - (34.c) indicate, the composite signal $\widetilde{x}_{RS}$ does not include horizontal reverse-order components. On the other hand, regarding the equation (34.b), although it includes the term $x_R$ (m', N'-1-n), i.e., the vertical reverse-order components, the vertical reverse-order components are opposite in polarity to those of the composite signal $\widetilde{x}_{PQ}$ of the blocks P and Q. Hence, by adding $\widetilde{x}_{PQ}$ and $\widetilde{x}_{RS}$, it is possible to cancel the vertical reverse-order components and to thereby reconstruct the input signals $x_p(m, n)$. It is to be noted that the blocks R and S may be located at any positions and have any block sizes so long as they adjoin the blocks P and Q at the opposite side of the line n = N/2.

Even when the blocks P and Q adjoin each other on a vertical line, the previously stated equations free the decoded signals associated with the blocks P and Q from vertical reverse-order components. So long as other blocks adjoining the blocks P and Q are located at the opposite side of the above-mentioned vertical line, overlaying the inverse-transformed signals is successful in reconstructing input signals while cancelling the horizontal reverse-order components with no regard to the block size and the position in the vertical direction.

As stated above, the present invention is capable of reconstructing an input signal even when a bidimensional input signal is split into overlapping rectangular blocks each having a particular size.

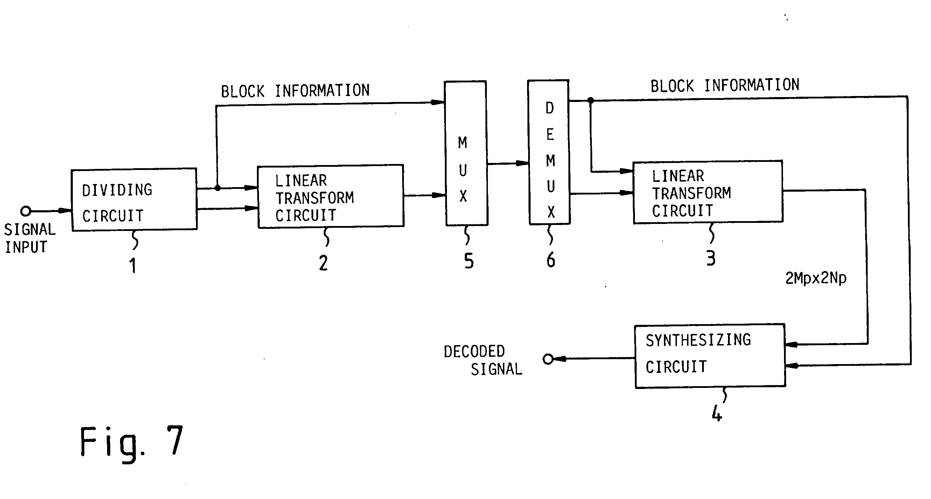

Referring to Fig. 7, a coding apparatus and a decoding apparatus embodying the present invention is shown. As shown, the coding apparatus has a dividing circuit 1 and a linear transform circuit 2. The dividing circuit 1 divides a bidimensional input signal into a plurality of rectangular blocks each having a particular size while generating block division information. Assuming that a given block produced by the dividing circuit 1 is $M_P$ x $N_P$, the linear transform circuit 2 calculates the transformed signals of $M_P$ x $N_P$ points by linear transform by use of $2M_P$ x $2N_P$ sampling points around the block of interest. The block information from the dividing circuit 1 and the transformed signal information from the linear transform circuit 2 are multiplexed by a multiplexer 5 and then sent to the decoding apparatus.

The decoding apparatus has a linear transform circuit 3 and a synthesizing circuit 4 which overlays the signals of blocks. The linear transform circuit 3 calculates inverse-transformed signals of $2M_P$ x $2N_P$ points by linear transform on the basis of the transformed signal data and block information which are separated by a demultiplexer 6. The synthesizing circuit 4 arranges the inverse-transformed signals on the basis of the block information and, in portions where blocks overlap, adds the signals to produce a decoded signal.

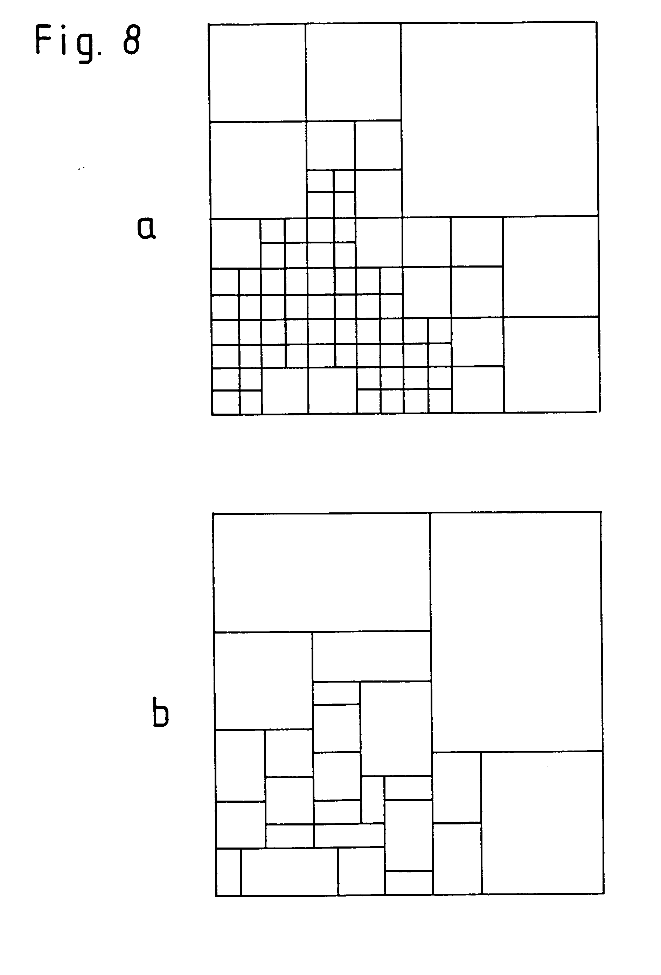

Figs. 8a and 8b each shows a specific manner of dividing a bidimensional input signal into blocks. In Fig. 8a, a bidimensional signal is repetitively bisected in the horizontal and vertical directions a necessary number of times. In Fig. 8b, such a signal is divided into rectangular blocks each having a particular size. Regarding the basis of division, some different approaches are available, e.g., calculating the amounts of code of transformed signals and selecting particular division which makes the amounts of code minimum, and selecting division which makes the degree of power concentration on transformed signals representative of the intensities of lower frequency components maximum.

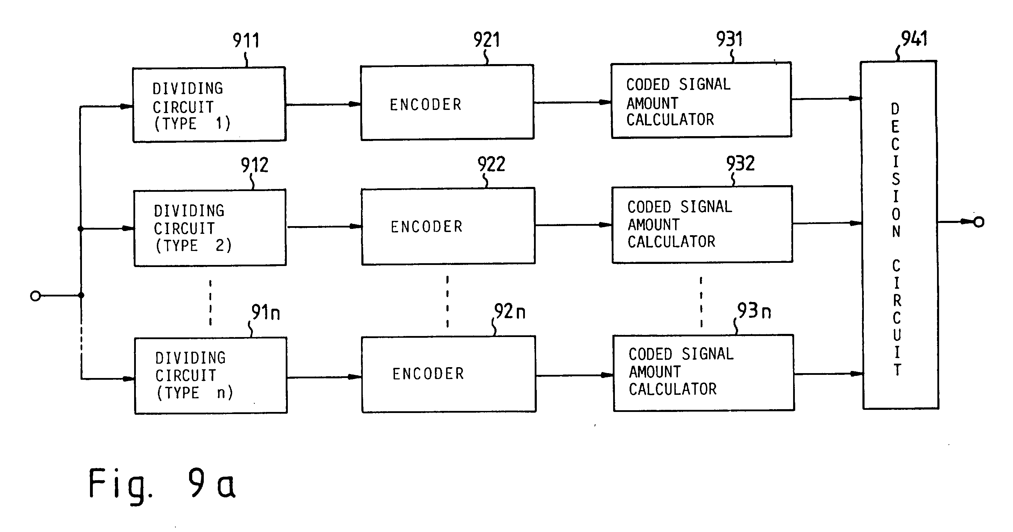

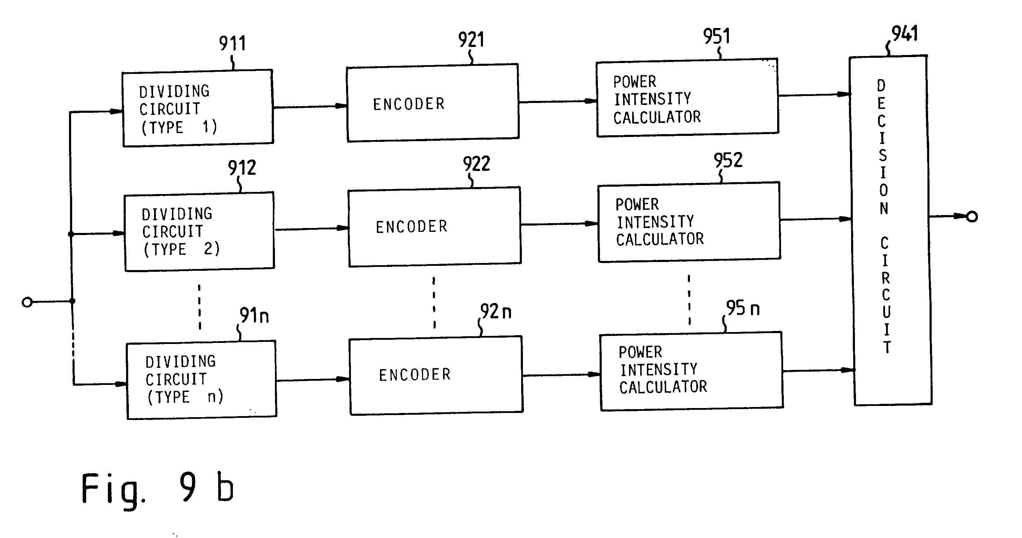

Figs. 9a and 9b each shows a specific construction of circuitry for selecting a dividing method. In Fig. 9a, the circuitry has n dividing circuits 911-91n, n encoders or linear transform circuits 921-92n, n coded signal amount calculators 931-93n, and a single decision circuit 941. The dividing circuits 911-91n each divides a bidimensional input signal by a particular dividing method. The encoders 921-92n each produces transformed signals with each of the blocks produced by the associated dividing circuit. The coded signal amount calculators 931-93n each calculates the amount of code of the transformed signal fed thereto from the associated encoder. The outputs of the coded signal amount calculators 931-93n are connected to the decision circuit 941. The decision circuit 941 compares one frame of bidimensional input signals derived from the respective dividing methods and outputs a selection signal indicative of one of the dividing methods which is smaller in the amount of coded signals than the others. The circuitry shown in Fig. 9b is identical with the circuitry of Fig. 9a except that the coded signal amount calculators 931-93n are replaced with power intensity calculators 951-95n. The circuitry of Fig. 9b selects one of the dividing methods which makes the power intensity on the lower frequencies of transformed signals maximum. The dividing circuit 1 shown in Fig. 7 divides a bidimensional input signal into a plurality of blocks by using a particular method which is selected by the circuitry of Fig. 9a or 9b beforehand. The block information associated with each block, e.g., a block size and a start point are coded, multiplexed with transformed signals and then sent to the decoding side since they are essential in the event of decoding. The division shown in Fig. 8a, for example, may be implemented with the coding method described in the previously stated Chen's paper. Specifically, as Chen shows in Fig. 2 of the paper, "1" is assigned to a given block when the block is divided into four subblocks, or "0" is assigned when it is not divided. When the block is divided into four subblocks, "1" and "0" are selectively and sequentially assigned to the upper left, upper right, lower left and lower right subblocks. As a result, a bit sequence representative of the levels and division states of all of the blocks is produced. This bit sequence is used as block information. Since the size of a given block can be determined on the basis of the level of the block if the size per frame is known, block size information does not have to be sent. In the case of the division shown in Fig. 8b, the reference point of each block such as the coordinates of the upper left point and the block size may be used as block information.

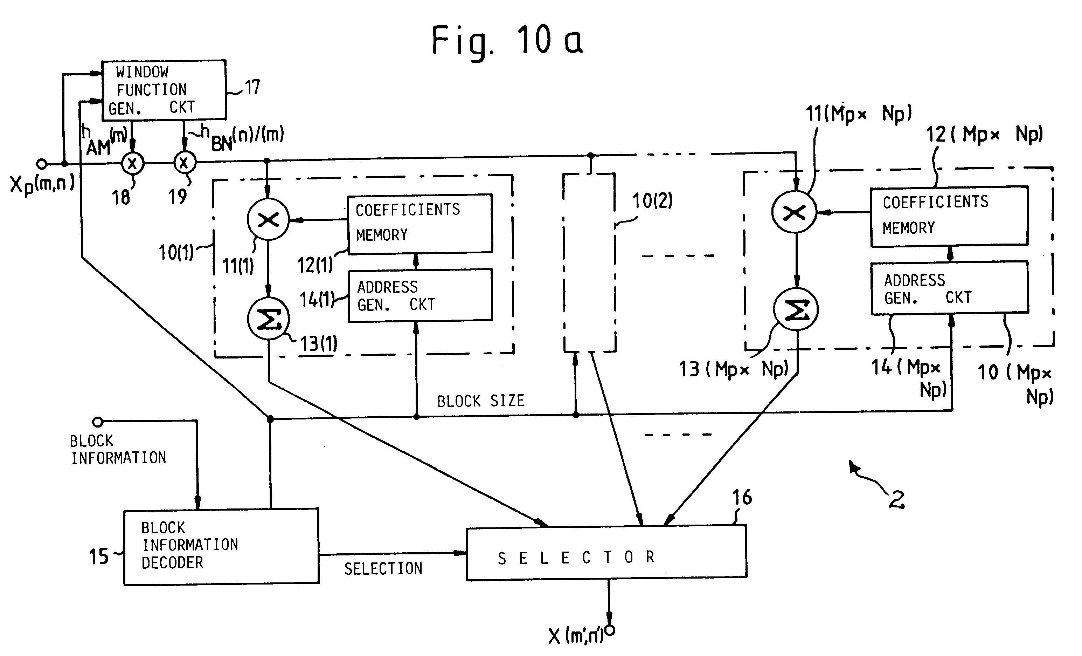

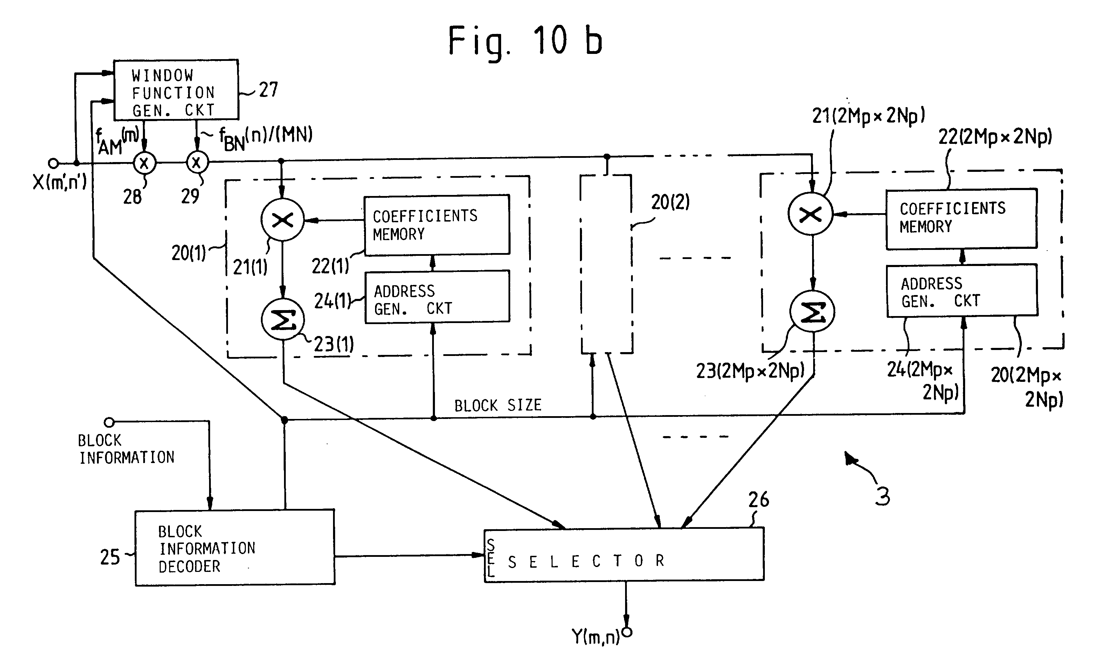

The linear transform circuit 2, Fig. 7, may be implemented by $M_p$ x $N_p$ multiplying and adding circuits which, assuming that the predetermined maximum block size is $M_p$ x $N_p$, weight and add the input signals of $2M_p$ x $2N_p$ points. Fig. 10a shows a specific construction of the linear transform circuit 2. As shown, the linear transform circuit 2 has $M_p$ x $N_p$ multiplying and adding circuits 10(1) - 10($M_p$ x $N_p$) connected to an input signal line in parallel with each other, a block information decoder 15 for decoding block information to produce the size of a block of interest and the selection signal, and a selector 16 for selecting the output signal of one of the multiplying and adding circuits 10(1) -10($M_p$ x $N_p$) in response to the selection signal. A window function generating circuit 17 generates window functions $h_{AM}(m)$ and $h_{BN}(n)$ on a direction and block size basis according to the block size and input signal coordinates. A first and a second multiplier 18 and 19 multiply the input signal $x_p$ (m, n) by the window functions $h_{AM}(m)$ and $h_{BN}(n)$, respectively. The multiplying and adding circuits 10(1) -10($M_p$ x $N_p$) each has a coefficient memory 12, a multiplier 11, an accumulator 13, and an address generating circuit 14. Transform operations are as follows. Assume that a block of interest has the size $M_p$ x $N_p$, i.e., the maximum block size. To transform such a block having the maximum block size, input signals at $2M_p$ x $2N_p$ points centering around the block are transformed, as stated previously. As the equation (3) indicates, the transformed signal $X_p(m', n')$ ($0 \le m' \le M_p-1$, $0 \le n' \le N_p-1$) of the input signal $x_p(m, n)$ ($0 \le m \le 2M_p-1$, $0 \le n \le 2N_p-1$) is expressed as:

$$X_p (m', n') = \sum_{m=0}^{2M_p-1} \sum_{n=0}^{2N_p-1} x_p (m, n) \, h_{AM}(m) \, h_{BN}(n)$$

$$\times \cos \left\{ (2m + M_p + 1) (2m' + 1) \, \pi / (4M_p) \right\}$$

$$\times \cos \left\{ (2n + N_p + 1) (2n' + 1) \, \pi / (4N_p) \right\}$$

$$\dots \dots (3')$$

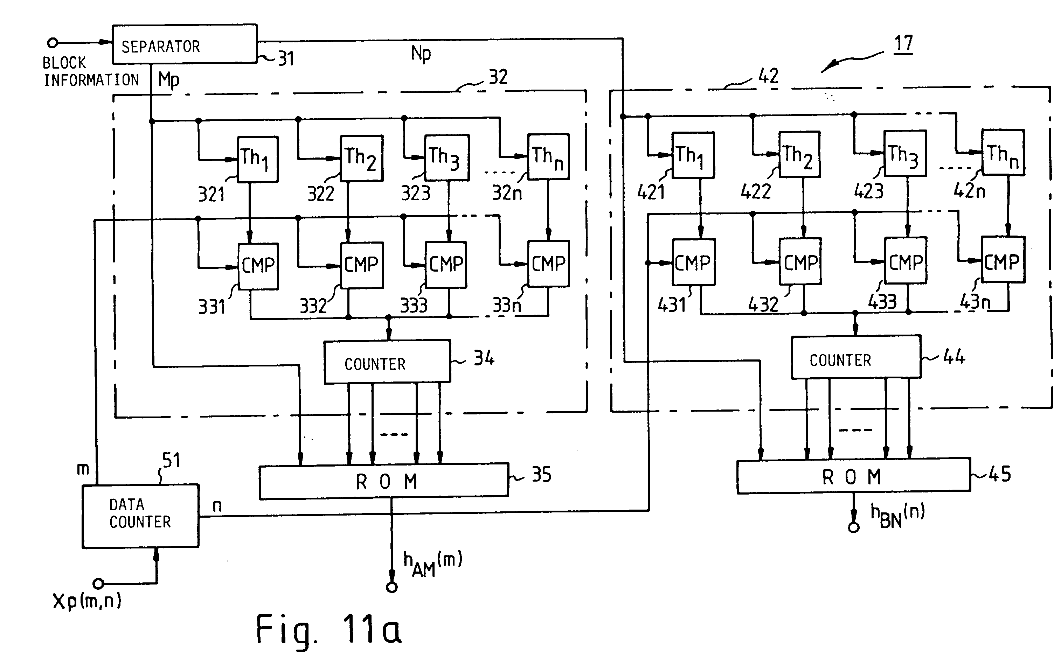

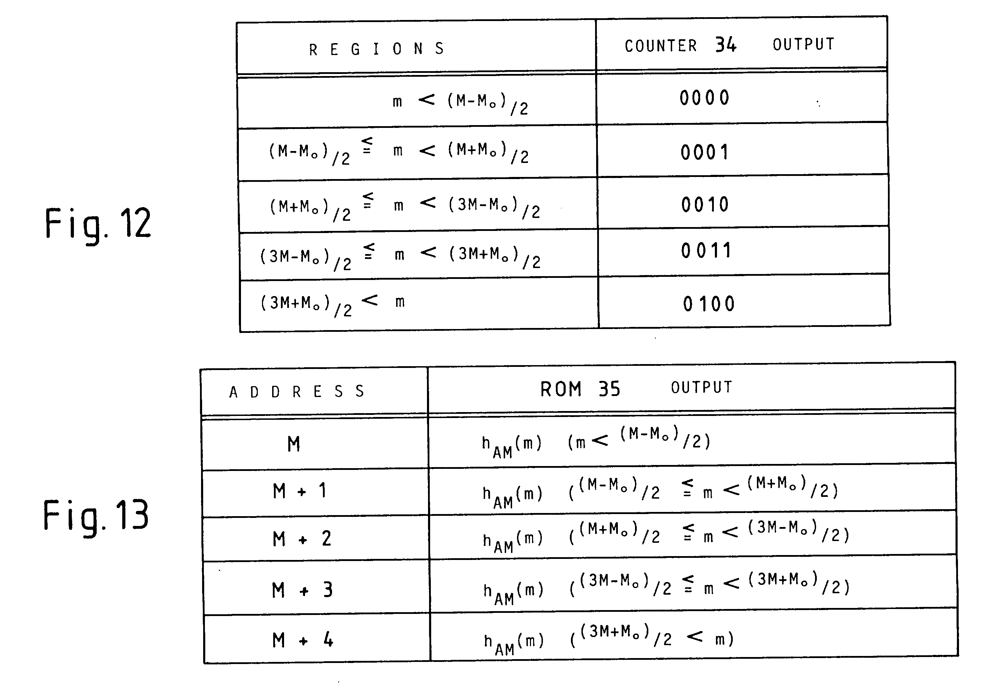

In the above transform equation, $h_{AM}(m)$ and $h_{BN}(n)$ are multiplied by the input signal $x_p(m, n)$ by the multipliers 18 and 19, respectively. Hence, if the coefficients of the second term and successive terms of the right member are stored in the coefficients memories 12(1) - 12($M_p$ x $N_p$) of the multiplying and adding circuits 10(1) -10($M_p$ x $N_p$), transformed signals are attainable. For example, the coefficient memory 12(1) of the circuit 10(1) stores a coefficient matrix (assumed to be $C_1(m, n)$) made up of $2M_p$ x $2N_p$ elements resulted from cos $\{(2m+M_p+1) \, \pi/(4M_p)\}$ x cos $\{(2n+N_p+1) \, \pi/(4N_p)\}$ ($0 \leq m \leq 2M_p$-1, $0 \leq n \leq 2N_p$-1) as transform coefficients for blocks of the maximum size. Likewise, the coefficient memory 12($M_p$ x $N_p$) of the "$M_p$ x $N_p$" multiplying and adding circuit 10($M_p$ x $N_p$) stores a coefficient matrix of $2M_p$ x $2N_p$ elements resulted from cos $\{(2m+M_p+1) \, (2M_p$-1) \, \pi/(4M_p)\}$ x cos $\{(2n+N_p+1) \, (2N_p$-1) \, \pi/(4Np)\}$. It will be seen from the equation (3') that the coefficient changes with the block size. Hence, a plurality of coefficient matrixes each being assigned to a particular block size are stored in each coefficient memory. Which of such coefficient matrixes should be selected is determined on the basis of block information which the block information decoder 15 produces. Implemented by ROMs, for example, the address generating circuits 14(1) - 14($M_p$ x $N_p$) each generates, in response to block size information from the block information decoder 15, the leading address of associated one of the coefficient memories 12(1) -12($M_p$ x $N_p$) where a coefficient matrix matching the block size of interest is stored. A reading circuit, not shown, sequentially reads in synchronism with the input signals the transform coefficients $C_1(m, n)$ associated with the block of maximum size out of the leading address having been designated by the address generating circuit 14(1). The multiplier 11(1) multiplies the window function-multiplied input signals $x_p(m, n) \, h_{AM}(m) \cdot h_{BN}(n)$ by the transform coefficients $C_1(m, n)$. The accumulator 13(1) accumulates the results of multiplications to produce a transformed signal $X_p(0, 0)$. The other multiplying and adding circuits also perform similar operations in parallel. As a result, transformed signals $X_p(0,0)$ - $X_p(M_p$-1, $N_p$-1) are obtained. The transformed signals $X_p(m', n')$ are sequentially selected by the selector 16 and fed therefrom to the multiplexer 5. The selection by the selector 16 is controlled by the selection signal which is generated by the block information decoder 15. Specifically, the block information decoder 15 has, for example, a table listing the correspondence of the input signals of the selector 16 and the transformed signals $X_p(m', n')$ and controls the selector 16 in such a manner as to select only necessary ones of decoded block information. In the case of a block of maximum size, the decoder 15 generates a selection signal such that the selector 16 sequentially selects the output signals of all of the multiplying and adding circuits, the output signal $X_p(0, 0)$ of the circuit 10(1) being first, for example. The resulted transformed signals $x_p(m', n')$ are multiplexed with corresponding block information by the multiplexer 5, Fig. 7, and then transmitted to the decoding side. The window function generating circuit 17 will be described more specifically hereinafter. The present invention assigns different window functions on a direction and block size basis. Moreover, the values of window functions change from one region to another of the input signal, as described above. For this reason, the window function generating circuit 17 of the linear transform circuit 2 shown in Fig. 10a and located at the coding size generates window functions $h_{AM}(m)$ and $h_{BN}(n)$ in response to the input signal and block information. Fig. 11a shows a specific construction of the window function generating circuit 17. In Fig. 11a, the input signals $x_p(m, n)$ and the block information are applied to a data counter 51 and a separator 31, respectively. The data counter 51 counts the input signals $x_p(m, n)$ to produce the coordinates m and n of the input signals. The coordinate m in the horizontal direction and the coordinate n in the vertical direction are fed to a first region decision circuit 32 and a second region decision circuit 42, respectively. The separator 31 separates the block information from the block information decoder 15 into a horizontal block size M and a vertical block size N and transfers the resulted block sizes M and N to the decision circuits 32 and 42, respectively. Since the two region decision circuits 32 and 42 are identical in construction and operation, let the following description concentrate on the region decision circuit 32 by way of example. The region decision circuit 32 has n threshold generating circuits 321-32n, n comparators 331-33n, and a counter 34. On receiving the horizontal block size M, the threshold generating circuits 321-32n generate corresponding n threshold values. The comparators 331-33n compare the horizontal coordinate m of the input signal with the n threshold values. The counter 34 receives the outputs of all of the comparators 331-33n to determine the number of comparators that have outputted a coincident output. More specifically, the threshold generating circuits 321-32n determine, on the basis of the horizontal block size M, the value of horizontal coordinate m where the value of the window function $h_{AM}(m)$ corresponding to the block size changes. When the window functions are configured as shown in Figs. 4a - 4c, four threshold values, i.e., $(M/2 - M_0/2)$, $(M/2 + M_0/2)$, $(3M/2 - M_0/2)$ and $(3M/2 + M_0/2)$ are needed. Since the minimum block size in the horizontal direction is determined beforehand, the threshold values can be generated if the horizontal block size M is given. The number of threshold generating circuits may be determined in matching relation to the window function $h_{AM}(m)$ whose 5 maximum number changes. Corresponding one-to-one to the threshold generating circuits 321-32n, the comparators 331-33n compare the horizontal coordinate of the input signal from the data counter 51 with the threshold values from their associated threshold generating circuits 321-32n and generate a pulse when they are coincident. The output pulses of the comparators 331-33n are applied to the count terminals of the counter 34, so that the counter 34 outputs the number of input pulses. The number of pulses is indicative of a particular region to which the horizontal coordinate m of the input signal belongs. Fig. 12 tabulates a relation between the horizontal coordinate m of the input signal and the output of the counter 34. In Fig. 12, the counter 34 is assumed to be a 4-bit counter. A ROM 35 stores window functions $h_{AM}(m)$ assigned to the horizontal direction. The lower bits and the upper bits of the address terminal of the ROM 35 are allocated to the output of the counter 34 and the horizontal block size M, respectively. Consequently, a particular window function matching a block size is selected with the result that the value of the window function is changed in association with the horizontal coordinate of the input signal. Fig. 13 shows a specific relation between the address of the ROM 35 and the content thereof on the assumption that the window function $h_{AM}(m)$ has five different values depending on the horizontal coordinate of the input signal. Likewise, the second region decision circuit 42 produces a window function $h_{BN}(n)$ matching a vertical block size of interest from a ROM 45 on the basis of the vertical block size N and the vertical coordinate n of the input signal. A counter 44 and the ROM 45 are respectively identical with the counter 34 and the ROM 35 except for the replacement of m, M, $M_0$ and $h_{AM}(m)$ with n, N, $N_0$ and $h_{BN}(n)$.

Referring again to Fig. 7, the block information and transformed (coded) signal multiplexed by the multiplexer 5 and then transmitted are separated by the demultiplexer 6. The transformed signal $X_p(m', n')$ and the block information are applied to the linear transform circuit 3 and the synthesizing circuit 4, respectively. Fig. 10b shows a specific construction of the linear transform circuit 3 which is substantially identical with the construction of Fig. 10a except for the number of multiplying and adding circuits 20(1) -20(2$M_p$x2$N_p$). As the equation (4) indicates, an inverse-transformed signal y (m, n) ($0 \leq m \leq 2M_p$-1, $0 \leq n \leq 2N_p$-1) derived from a transformed signal X (m', n') ($0 \leq m' \leq M_p$-1, $0 \leq n' \leq N_p$-1) is expressed as:

$$y_p (m, n) = \sum_{m'=0}^{M_p-1} \sum_{n'=0}^{N_p-1} X (m', n') \ f_{AM}(m) \ f_{BN}(n) / (M_p N_p)$$

$$\times \cos \left\{ (2m + M_p + 1) \ (2m' + 1) \ \pi / (4M_p) \right\}$$

$$\times \cos \left\{ (2n + N_p + 1) \ (2n' + 1) \ \pi / (4N_p) \right\}$$

$$\dots \dots (4')$$

A first and a second multiplier 28 and 29 multiply respectively the transformed signal x(m', n') by $f_{AM}(m)$ and $f_{BN}(n)/(MN)$ included in the above inverse transform equation. Coefficient memories 22(1) - 22(2$M_p$ x 2$N_p$) included in the multiplying and adding circuits 20(1) - 20(2$M_p$ x 2$N_p$), respectively, store the coefficients represented by the second term and successive terms of the right member. The coefficient memory 22(1), for example, stores inverse-transform coefficients associated with the block of maximum size which are an inverse-transform coefficient matrix (assumed to be $C_1^{-1}(m', n')$) of $M_p$ x $N_p$ elements represented by $\cos \{(M_p+1) (2m'+1) \pi/(4M_p)\}$ x $\cos \{(N_p+1) (2n'+1) \pi/(4N_p)\}$ ($0 \leq m' \leq M_p$-1, $0 \leq n' \leq N_p$-1). Likewise, the elements constituting the inverse-transform coefficient matrix $C_{2M_p \times 2N_p}^{-1}(m', n')$ stored in the "$2M_p$ x $2N_p$" coefficient memory 22(2$M_p$ x 2$N_p$) and associated with the block of maximum size are represented by $\cos \{(5M_p-1) (2m'+1) \pi/(4M_p)\}$ x $\cos \{(5N_p-1) (2n'+1) \pi/(4N_p)\}$ ($0 \leq m' \leq M_p$-1, $0 \leq n' \leq N_p$-1). The inverse-transform coefficients, like the transform coefficients, change with the block size. Hence, the coefficient memories each stores a plurality of inverse-transform coefficient matrixes matching different block sizes. A block information decoder 25 and address generating circuits 24(1) - 24(2$M_p$x2$N_p$) included in the multiplying and adding circuits cooperate to cause particular inverse-transform coefficient matrixes to be selected in matching relation to the block size. The selection principle is the same as with the coding linear transform circuit 2 and will not be described for simplicity. The inverse-transform coefficient matrix $C_1^{-1}(m', n')$ selected out of the coefficient memory 22(1) by the address generating circuit 24(1) is sequentially read out in synchronism with the transform signals $X_p(m', n')$ under the control of a reading circuit, not shown, and multiplied by the multiplier 21(1). An accumulator 23(1) accumulates the results of multiplications to produce $y_p(0, 0)$. The other multiplying and summing circuits also perform such operations in parallel. As a result,

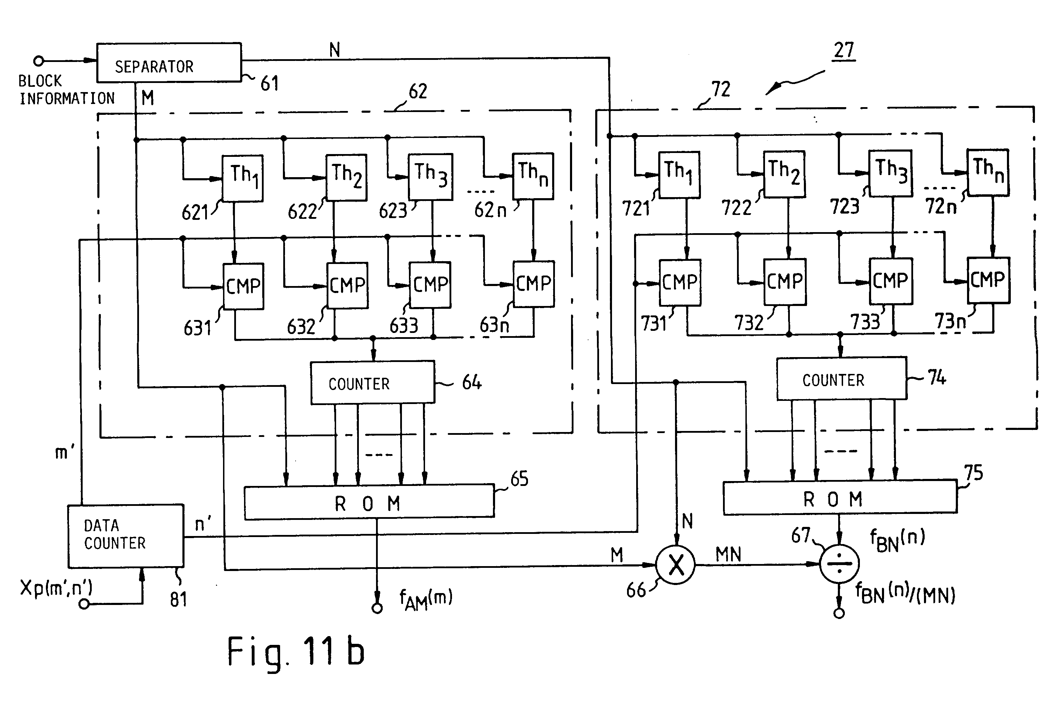

$y_p$ (0, 0), $y_p$ (0, 1), ..., $y_p$ ($2M_p$-1, $2N_p$-1) are obtained. A selector 26 sequentially selects the inverse-transformed signals $y_p$ (m, n) in response to selection signals from a block information decoder 25 and transfers them to the synthesizing circuit 4. Fig. 11b shows a specific construction of the window function generating circuit 27 shown in Fig. 10b. The circuitry shown in Fig. 11b is identical in construction and operation with the circuitry of Fig. 11a except for a multiplier 66 and a divider 67, and redundant description will be avoided for simplicity. The multiplier 66 and divider 67 are used to perform the division of the right member by the product of block sizes MN which occurs only in the inverse-transform equation (4) or (4'). Specifically, the multiplier 66 produces the product MN of horizontal and vertical block sizes M and N which a separator 61 outputs, while the divider 67 divides a vertical window function $f_{BN}(n)$ for decoding read out of a ROM 75 by the product MN, i.e., it produces $f_{BN}(n)/MN$. While the specific construction of Fig. 11b divides the vertical window function $f_{BN}(n)$ by the product MN of block sizes, it may be modified to divide the horizontal window function $f_{AM}(n)$ or the division may be effected by any other section of the linear transform circuit 3, if the inverse-transform equation (4') can be executed.

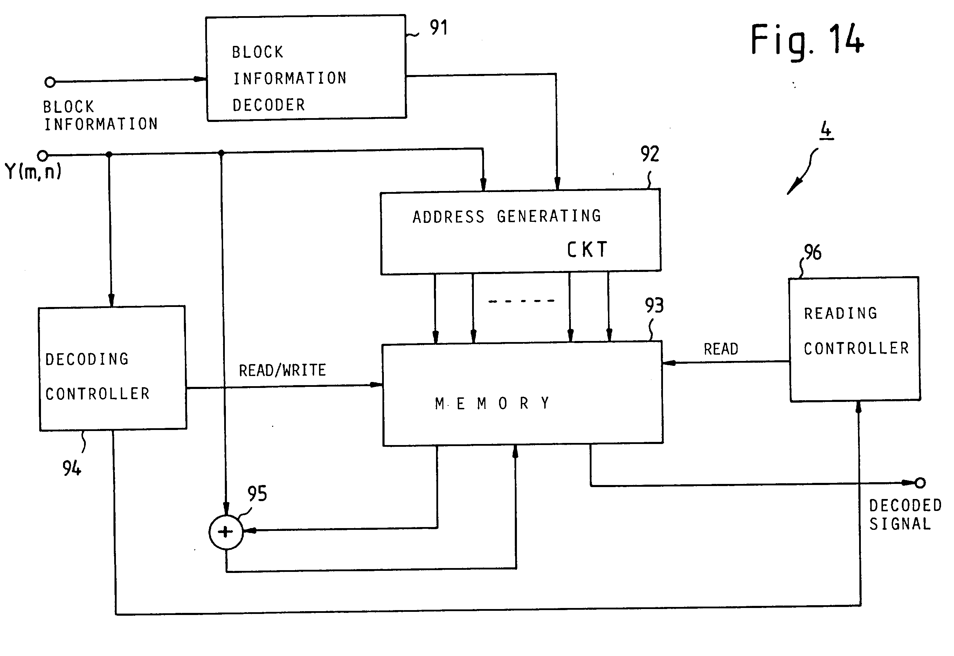

Referring to Fig. 14, a specific construction of the synthesizing circuit 4 is shown. As shown, the circuit 4 has a block information decoder 91, a memory 93 whose capacity is great enough to accommodate one frame of bidimensional input signals, and an address generating circuit 92. The block information decoder 91 outputs block origin information in response to block information fed thereto from the demultiplexer 6. The address generating circuit 92 generates an address signal meant for the memory 93 in response to an inverse-transformed signal and block information. An adder 95 adds signal data read out of the memory 93 and being decoded and a inverse-transformed signal. A decoding controller 94 controls the reading and writing of data in the memory 93 while decoding is under way. A reading controller 96 controls the read-out of one frame of decoded signals associated with bidimensional input signals. In operation, the block information decoder 91 produces, in response to block information separated by the demultiplexer 6, Fig. 7, a transform-coded block size and the position of the origin of the block (assumed to be the upper left point) in an input signal frame (block origin coordinates). The address generating circuit 92 generates a particular address of the memory 93 for writing a transformed signal on the basis of block origin coordinates and block size. The memory 93 has an address space identical with the sampling points of one frame of bidimensional input signals and is used for temporary storage during the course of decoding operation. On receiving the inverse-transformed signal y (m,n), the decoding controller 94 reads corresponding signal data being decoded out of the memory 93 within one sampling time of the inverse-transformed signal. Then, the decoding controller 94 writes in the same address the sum of the signal data and inverse-transformed signal which the adder 95 produces. As a result, inverse-transformed signals in a region where k blocks overlap are added k times. When the frame of input signals changes, the decoding controller 94 generates an end-of-decode signal to inform the reading controller 96 of the end of decoding. To detect the change of frame, a frame pulse usually included in a picture signal may be detected. In response to the end-of-decode signal, the reading controller 96 reads data out of the reading address of the memory 93 and sequentially outputs them as a decoded signal. On reading out all the data, the reading controller 96 resets the contents of the memory 93.

By the operations described above, the present invention produces correct decoded signals even when a bidimensional input signal is divided into blocks each having a particular block size and overlapping the others. Among the window functions assigned to the linear transform circuits 2 and 3, the window functions $h_{AMO}(m)$, $h_{BNO}(n)$, $f_{AMO}(m)$ and $f_{BNO}(n)$ for the block of the minimum size may be implemented as the window function represented by the equation 9 of the previously stated H. Schiller's paper or the window function shown in table 1 of J.P. Princen et al "Analysis/Synthesis Filter Bank Design Based on Time Domain Aliasing Cancellation", IEEE Transactions on Acoustics, Speech, and Signal Processing, Vol. 34, No. 5, October 1986, pp. 1153-1161. It is to be noted that $h_{AMO}(m)$ and $h_{BNO}(n)$ may have an identical configuration when the block of interest is square, i.e., $M_0 = N_0$ so long as they satisfy the equations (6.a) - (6.d). Regarding the window functions $h_{AM}(m)$, $h_{BN}(n)$, $f_{AM}(m)$ and $f_{BN}(n)$ for block sizes other than the minimum block size, assuming in the equations (7.a) - (7.n)

$$\begin{cases} h_{AM}(m) = \alpha_{AM} \, h_{AMO}(m) \\[2mm] f_{AM}(m) = 1/\alpha_{AM} \, f_{AMO}(m) \end{cases}$$

$$\begin{cases} h_{BN}(n) = \alpha_{BN} \, h_{BNO}(n) \\[2mm] f_{BN}(n) = 1/\alpha_{BN} \, f \cdot {}_{BNO}(n) \end{cases}$$

then

$$h_{AM}(m)$$

$$= \begin{cases} 0 & (m < M/2 - M_O/2) \\ \alpha_{AM} \, h_{AMO} \, (m - M/2 + M_O/2) & (M/2 - M_O/2 \leqq m < M/2 + M_O/2) \\ \alpha_{AM} & (M/2 + M_O/2 \leqq m < 3M/2 - M_O/2) \\ \alpha_{AM} \, h_{AMO} \, (m - 3M/2 + 3M_O/2) & (3M/2 - M_O/2 \leqq m < 3M/2 + M_O/2) \\ 0 & (m \geqq 3M/2 + M_O/2) \end{cases}$$

$$h_{BN}(n)$$

$$= \begin{cases} 0 & (n < N/2 - N_O/2) \\ \alpha_{BN} \, h_{BNO} \, (n - N/2 + N_O/2) & (N/2 - N_O/2 \leqq n < N/2 + N_O/2) \\ \alpha_{BN} & (N/2 + N_O/2 \leqq n < 3N/2 - N_O/2) \\ \alpha_{BN} \, h_{BNO} \, (n - 3N/2 + 3N_O/2) & (3N/2 - N_O/2 \leqq n < 3N/2 + N_O/2) \\ 0 & (n \geqq 3N/2 + N_O/2) \end{cases}$$

$$f_{AM}(m)$$

$$= \begin{cases} 0 & (m < M/2 - M_O/2) \\ f_{AMO} \, (m - M/2 + M_O/2) / \alpha_{AM} & (M/2 - M_O/2 \leqq m < M/2 + M_O/2) \\ 1 / \alpha_{AM} & (M/2 + M_O/2 \leqq m < 3M/2 - M_O/2) \\ f_{AMO} \, (m - 3M/2 + 3M_O/2) / \alpha_{AM} & (3M/2 - M_O/2 \leqq m < 3M/2 + M_O/2) \\ 0 & (m \geqq 3M/2 + M_O/2) \end{cases}$$

21

$$f_{BN}(n)$$

$$= \begin{cases} 0 & (n < N/2 - N_O/2) \\ f_{BNO}(n-N/2+N_O/2)/\alpha_{BN} & (N/2-N_O/2 \leqq n < N/2 + N_O/2) \\ 1/\alpha_{BN} & (N/2+N_O/2 \leqq n < 3N/2-N_O/2) \\ f_{BNO}(n-3N/2+3N_O/2)/\alpha_{BN} & (3N/2-N_O/2 \leqq n < 3N/2+N_O/2) \\ 0 & (n \geqq 3N/2 + N_O/2) \end{cases}$$

This is successful in reconstructing, when a transformed signal with no artifacts is decoded, an input signal in the decoded signal. In the above window functions, $\alpha_{AM}$ and $\alpha_{BN}$ are constants. Specifically, assuming that $M = N = 16$ and $M_O = N_O = 8$, the window functions may be selected as:

$$h_{AMO}(m) = f_{AMO}(m) = h_{BNO}(m) = f_{BNO}(m)$$

$$= \begin{cases} \sin\left\{\frac{\pi}{16}(m + \frac{1}{2})\right\} & (m = 0, 1, \ldots, 15) \\ 0 & (m < 0 \text{ or } 16 < m) \end{cases}$$

$$h_{AM}(m) = f_{AM}(m) = h_{BN}(m) = f_{BN}(m)$$

$$= \begin{cases} 0 & (m < 4) \\ \sin\left\{\frac{\pi}{16}(m - \frac{7}{2})\right\} & (m = 4, 5, \ldots, 11) \\ 1 & (m = 12, 13, \ldots, 19) \\ \sin\left\{\frac{\pi}{16}(m - \frac{23}{2})\right\} & (m = 20, 21, \ldots, 27) \\ 0 & (m \geqq 28) \end{cases}$$

In a modified form of the present invention, the window functions may be changed in matching relation to the size of the block adjoining the block of interest. Assuming $M = N = 16$ and $M_O = N_O = 8$ as mentioned above, when a block of 16 x 16 size adjoins a block of interest whose size is 16 x 16 at the right-hand side of the latter in the horizontal direction, the right half (m 16) of the window functions $h_{AM}(m)$ and $f_{AM}(m)$ may be

$$\begin{cases} \sin\left\{\frac{\pi}{32}(m+\frac{1}{2})\right\} & (m = 16,\ 17,\ \ldots,\ 31) \\ \\ 0 & (m \geq 32) \end{cases}$$

The same holds true for the block adjoining the block of interest at the left-hand side of the latter and the top or the bottom of the block of interest. When blocks neighboring the block of interest are of 16 x 16 size,

$$\begin{cases} 0 & (m < 0) \\ \\ \sin\left\{\frac{\pi}{32}(m+\frac{1}{2})\right\} & (m = 0,\ 1,\ \ldots,\ 31) \\ \\ 0 & (m \geq 32) \end{cases}$$

In summary, the present invention produces a decoded signal by adding the inverse-transformed signals of nearby blocks. This not only reduces block boundary artifacts but also allows the block size to be changed in matching relation to the characteristic of a signal. The present invention, therefore, achieves extremely efficient coding by selecting a comparatively large block size in, for example, an area occupied by the same pattern or a comparatively small block size in, for example, an area where the characteristic of the signal sharply changes. Another advantage attainable with the present invention is that the number of sampling points of a signal to be transmitted is the same as that of an input signal.

## Claims

1. A method of coding and decoding a bidimensional signal, comprising the steps of:
   at a coding side

   (a) dividing a bidimensional input signal into rectangular blocks of a plurality of sizes according to block division information;
   (b) providing window functions $h_{AM}(m)$ and $h_{BN}(n)$ on a direction and block size basis;
   (c) calculating, assuming that a block of interest has an M x N size, transformed signals $X_p(k, i)$ from input signals $x_p(m, n)$ ($m = 0, 1, ..., 2M-1$; $n = 0, 1, ..., 2N-1$) by a transform equation:

$$X_p(k, i) = \sum_{m=0}^{2M-1} \sum_{n=0}^{2N-1} x_p(m, n)\ h_{AM}(m)\ h_{BN}(n)$$

$$\times \cos\left\{(2m + M + 1)(2k + 1)\ \pi/(4M)\right\}$$

$$\times \cos\left\{(2n + N + 1)(2i + 1)\ \pi/(4N)\right\}$$

$$(k = 0,\ 1,\ \ldots,\ M-1;\quad i = 0,\ 1,\ \ldots,\ N-1)$$

   (d) transmitting said block division information and said transformed signals to a decoding side;

   at said decoding side

   (e) providing window functions $f_{AM}(m)$ and $f_{BN}(n)$ corresponding to said window functions $h_{AM}(m)$ and $h_{BN}(n)$, respectively;
   (f) calculating, when a block size of said transformed signals sent from said coding side is M x N, inverse-

transformed signals $y_p$ (m, n) of 2M x 2N points from said transformed signals by using a transform equation:

$$y_p \ (m, \ n) \ = \ \sum_{k=0}^{M-1} \ \sum_{i=0}^{N-1} \ X_p(k, \ i) \ f_{AM}(m) \ f_{BN}(n) \ / \ (MN)$$

$$x \ \cos \left\{ (2m + M + 1) \ (2k + 1) \ \pi \ / \ (4M) \right\}$$

$$x \ \cos \left\{ (2n + N + 1) \ (2i + 1) \ \pi \ / \ (4N) \right\}$$

$$(m \ = \ 0, \ 1, \ ..., \ 2M\text{-}1; \quad n \ = \ 0, \ 1, \ ..., \ 2N\text{-}1)$$

(g) arranging said inverse-transformed signals according to said block division information sent from said coding side; and

(h) adding, in a portion where a plurality of blocks overlap, said inverse-transformed signals to produce a decoded signal.

2. An apparatus for coding a bidimensional signal, comprising:

means for dividing a bidimensional input signal into rectangular blocks of a plurality of sizes according to block division information; and

means having window functions $h_{AM}$ (m) and $h_{BN}$ (n) on a block size and direction basis for calculating, when a block of interest has an M x N size, transformed signals $X_p$ (k, i) of M x N points from input signals $x_p$ (m, n) (m = 0, 1, ..., 2M-1; n = 0, 1, ..., 2N-1) of 2M x 2N points centering around said block of interest by using a transform equation:

$$X_p \ (k, \ i) \ = \ \sum_{m=0}^{2M-1} \ \sum_{n=0}^{2N-1} \ x_p(m, \ n) \ h_{AM}(m) \ h_{BM}(n)$$

$$x \ \cos \left\{ (2m + M + 1) \ (2k + 1) \ \pi \ / \ (4M) \right\}$$

$$x \ \cos \left\{ (2n + N + 1) \ (2i + 1) \ \pi \ / \ (4N) \right\}$$

$$(k \ = \ 0, \ 1, \ ..., \ M\text{-}1; \quad i \ = \ 0, \ 1, \ ..., \ N\text{-}1)$$

said block division information and said transformed signals being outputted.

3. An apparatus for decoding a bidimensional signal which has been generated at a coding side by a coding apparatus as defined in claim 2, said decoding apparatus comprising:

means having window functions $f_{AM}(m)$ and $f_{BN}(n)$ corresponding respectively to window functions $h_{AM}(m)$ and $h_{BN}(n)$ recited in claim 2 for calculating, when transformed signals transmitted from said coding side have a block size of M x N, inverse-transformed signals $y_p$ (m, n) of 2M x 2N points from input transformed signals $X_p$ (k,i) by using a transform equation:

$$y_p (m, n) = \sum_{k=0}^{M-1} \sum_{i=0}^{N-1} X_p(k, i) \ f_{AM}(m) \ f_{BN}(n)/(MN)$$

$$\times \cos\left\{(2m + M + 1)(2k + 1)\ \pi/(4M)\right\}$$

$$\times \cos\left\{(2n + N + 1)(2i + 1)\ \pi/(4N)\right\}$$

$$(m = 0, 1, \ldots, 2M-1; \quad n = 0, 1, \ldots, 2N-1)$$

and means for arranging said inverse-transformed signals $y_p(m,n)$ according to block division information transmitted from said coding side and, in a portion where a plurality of blocks overlap, adding said inverse-transformed signals to produce a decoded signal.

**Patentansprüche**

1. Verfahren zum Kodieren und Dekodieren eines zweidimensionalen Bildsignals mit den Schritten:
   auf einer Kodierungsseite

   (a) Unterteilen eines zweidimensionalen Eingangssignals in rechteckige Blöcke mehrerer Abmessungen gemäß einer Block-Unterteilungsinformation;
   (b) Bereitstellen von Fensterfunktionen $h_{AM}(m)$ und $h_{BN}(n)$ auf einer Richtungs- und Blockabmessungsbasis;
   (c) Berechnen unter der Annahme, daß ein interessierender Block eine Abmessung von M x N aufweist, von transformierten Signalen $X_p(k, i)$ aus Eingangssignalen $x_p(m, n)$ ($m = 0, 1, \ldots, 2M-1; n = 0, 1, \ldots, 2N-1$) mittels einer Transformationsgleichung:

$$X_p (k, i) = \sum_{m=0}^{2M-1} \sum_{n=0}^{2N-1} x_p(m, n) \ h_{AM}(m) \ h_{BN}(n)$$

$$\times \cos\left\{(2m+M+1)(2k+1)\pi/(4M)\right\}$$

$$\times \cos\left\{(2n+N+1)(2i+1)\pi/(4N)\right\}$$

$$(k = 0, 1, \ldots, M-1; \ i = 0, 1, \ldots, N-1)$$

   (d) Übertragen der Block-Unterteilungsinformation und der transformierten Signale auf eine Dekodierungsseite;

   auf der Dekodierungsseite:

   (e) Bereitstellen von Fensterfunktionen $f_{AM}(m)$ und $f_{BN}(n)$, die den Fensterfunktionen $h_{AM}(m)$ bzw. $h_{BN}(n)$ entsprechen;
   (f) Berechnen, wenn eine Blockabmessung der von der Kodierungsseite gesendeten transformierte Signale gleich M x N ist, von invers-transformierten Signalen $y_p(m, n)$ mit 2M x 2N Punkten aus den transformierten Signalen mittels einer Transformationsgleichung:

$$Y_p (m, n) = \sum_{k=0}^{M-1} \sum_{i=0}^{N-1} X_p(k, i) \ f_{AM}(m) \ f_{BN}(n)/(MN)$$

$$\times \cos\left\{(2m+M+1)(2k+1)\pi/(4M)\right\}$$

$$\times \cos\left\{(2n+N+1)(2i+1)\pi/(4N)\right\}$$

$$(m = 0, 1, \ldots, 2M-1; \ n = 0, 1, \ldots, 2N-1)$$

(g) Anordnen der invers-transformierten Signale gemäß der von der Kodierungsseite gesendeten Block-Unterteilungsinformation; und

(h) Addieren der invers-transformierten Signale in einem Bereich, wo sich mehrere Blöcke überlappen, um ein dekodiertes Signal zu erzeugen.

2. Vorrichtung zum Kodieren eines zweidimensionalen Bildsignals mit:

einer Einrichtung zum Unterteilen eines zweidimensionalen Eingangssignals in rechteckige Blöcke mehrerer Abmessungen gemäß einer Block-Unterteilungsinformation; und

einer Einrichtung mit Fensterfunktionen $h_{AM}(m)$ und $h_{BN}(n)$ auf einer Richtungs- und Blockabmessungsbasis zum Berechnen, wenn ein interessierender Block eine Abmessung von M x N aufweist, von transformierten Signalen $X_p(k, i)$ von M x N Punkten aus Eingangssignalen $x_p(m, n)$ (m = 0, 1, ...., 2M-1; n = 0, 1, ...., 2N-1) von 2M x 2N Punkten mittig um den interessierenden Block mittels einer Transformationsgleichung:

$$X_p (k, i) = \sum_{m=0}^{2M-1} \sum_{n=0}^{2N-1} x_p(m, n)\ h_{AM}(m)\ h_{BN}(n)$$

$$\times \cos \{(2m+M+1)\ (2k+1)\pi/(4M)\}$$

$$\times \cos \{(2n+N+1)\ (2i+1)\pi/(4N)\}$$

$$(k = 0, 1, ...., M-1;\ i = 0, 1, ...., N-1)$$

wobei die Block-Unterteilungsinformation und die transformierten Signale ausgegeben werden.

3. Vorrichtung zum Dekodieren eines zweidimensionalen Bildsignals, welches auf einer Kodierungsseite durch eine Kodierungsvorrichtung nach Anspruch 2 erzeugt wurde, wobei die Vorrichtung aufweist:

eine Einrichtung mit Fensterfunktionen $f_{AM}(m)$ und $f_{BN}(n)$, die den in Anspruch 2 genannten Fensterfunktionen $h_{AM}(m)$ bzw. $h_{BN}(n)$ entsprechen, zum Berechnen, wenn transformierte Signale von der Kodierungsseite eine Blockabmessung von M x N aufweisen, von invers-transformierten Signalen $y_p(m, n)$ mit 2M x 2N Punkten aus eingegebenen transformierten Signalen $X_p(k, i)$ mittels einer Transformationsgleichung:

$$Y_p(m, n) = \sum_{k=0}^{M-1} \sum_{i=0}^{N-1} X_p(k, i)\ f_{AM}(m)\ f_{BN}(n)/(MN)$$

$$\times \cos \{(2m+M+1)\ (2k+1)\pi/(4M)\}$$

$$\times \cos \{(2n+N+1)\ (2i+1)\pi/(4N)\}$$

$$(m = 0, 1, ...., 2M-1;\ n = 0, 1, ...., 2N-1)$$

und eine Einrichtung zum Anordnen der invers-transformierten Signale $y_p(m, n)$ gemäß der von der Kodierungsseite gesendeten Block-Unterteilungsinformation und zum Addieren der invers-transformierten Signale in einem Bereich, wo sich mehrere Blöcke überlappen, um ein dekodiertes Signal zu erzeugen.

**Revendications**

1. Procédé de codage et de décodage d'un signal bidimensionnel, comprenant les étapes consistant à :

- d'un côté de codage

(a) diviser un signal d'entrée bidimensionnel en blocs rectangulaires de plusieurs tailles selon des informations de division de blocs;

(b) fournir des fonctions de fenêtre $h_{AM}(m)$ et $h_{BN}(n)$ sur une base de direction et de taille de bloc;

(c) calculer, en supposant qu'un bloc étudié a une taille M x N, des signaux de transformation $X_p(k, i)$ à partir de signaux d'entrée $x_p(m, n)$ (m = 0, 1, ..., 2M-1; n = 0, 1, ..., 2N-1) par une équation de transformation :

$$X_p(k, i) = \sum_{m=0}^{2M-1} \sum_{n=0}^{2N-1} x_p(m, n) \; h_{AM}(m) \; h_{BN}(n)$$

$$x \; \cos\{(2m + M + 1)(2k + 1)\pi/(4M)\}$$

$$x \; \cos\{(2n + N + 1)(2i + 1)\pi/(4N)\}$$

$$(k = 0, 1, \ldots, M-1; \; i = 0, 1, \ldots, N-1);$$

(d) transmettre lesdites informations de division de blocs et lesdits signaux de transformation à un côté de décodage;

- dudit côté de décodage

(e) fournir des fonctions de fenêtre $f_{AM}(m)$ et $f_{BN}(n)$ correspondant auxdites fonctions de fenêtre $h_{AM}(m)$ et $h_{BN}(n)$, respectivement;

(f) calculer, quand une taille de bloc desdits signaux de transformation envoyés depuis ledit côté de codage est M x N, des signaux de transformation inverse $y_p(m, n)$ de 2M x 2N points à partir desdits signaux de transformation en utilisant une équation de transformation :

$$y_p(m, n) = \sum_{k=0}^{M-1} \sum_{i=0}^{N-1} X_p(k, i) \; f_{AM}(m) \; f_{BN}(n)/(MN)$$

$$x \; \cos\{(2m + M + 1)(2k + 1)\pi/(4M)\}$$

$$x \; \cos\{(2n + N + 1)(2i + 1)\pi/(4N)\}$$

$$(m = 0, 1, \ldots, 2M-1; \; n = 0, 1, \ldots, 2N-1);$$

(g) arranger lesdits signaux de transformation inverse selon lesdites informations de division de blocs envoyées depuis ledit côté de codage; et

(h) ajouter, dans une partie où plusieurs blocs se chevauchent, lesdits signaux de transformation inverse pour produire un signal décodé.

2. Dispositif pour coder un signal bidimensionnel, comprenant :

- des moyens pour diviser un signal d'entrée bidimensionnel en blocs rectangulaires de plusieurs tailles selon des informations de division de blocs; et

- des moyens ayant des fonctions de fenêtre $h_{AM}(m)$ et $h_{BN}(n)$ sur une base de taille de bloc et de direction pour calculer, quand un bloc étudié a une taille M x N, des signaux de transformation $X_p(k, i)$ de M x N points à partir de signaux d'entrée $x_p(m, n)$ (m = 0, 1, ..., 2M-1; n = 0, 1, ..., 2N-1) de 2M x 2N points centrés autour dudit bloc étudié en utilisant une équation de transformation :

$$X_p(k, i) = \sum_{m=0}^{2M-1} \sum_{n=0}^{2N-1} x_p(m, n) \; h_{AM}(m) \; h_{BN}(n)$$

$$x \; \cos\{(2m + M + 1)(2k + 1)\pi/(4M)\}$$

$$x \; \cos\{(2n + N + 1)(2i + 1)\pi/(4N)\}$$

$$(k = 0, 1, \ldots, M-1; \; i = 0, 1, \ldots, N-1)$$

lesdites informations de division de blocs et lesdits signaux de transformation étant sortis.

3. Dispositif pour décoder un signal bidimensionnel qui a été généré à un côté de codage par un dispositif de codage comme défini à la revendication 2, ledit dispositif de décodage comprenant :

- des moyens ayant des fonctions de fenêtre $f_{AM}(m)$ et $f_{BN}(n)$ correspondant respectivement à des fonctions de fenêtre $h_{AM}(m)$ et $h_{BN}(n)$ citées dans la revendication 2 pour calculer, quand des signaux de transformation transmis depuis ledit côté de codage ont une taille de bloc de M x N, des signaux de transformation inverse $y_p(m, n)$ de 2M x 2N points à partir des signaux de transformation d'entrée $X_p(k, i)$ en utilisant une équation de transformation :

$$y_p(m, n) = \sum_{k=0}^{M-1} \sum_{i=0}^{N-1} X_p(k, i) \ f_{AM}(m) \ f_{BN}(n)/(MN)$$

$$x \ \cos\{(2m + M + 1)(2k + 1)\pi/(4M)\}$$

$$x \ \cos\{(2n + N + 1)(2i + 1)\pi/(4N)\}$$

$$(m = 0, 1, ..., 2M-1; \ n = 0, 1, ..., 2N-1); \ et$$

- des moyens pour arranger lesdits signaux de transformation inverse $y_p(m, n)$ selon les informations de division de blocs transmises depuis ledit côté de codage et, dans un partie où plusieurs blocs se chevauchent, ajouter lesdits signaux de transformation inverse pour produire un signal décodé.

Fig. 1 PRIOR ART

Fig. 2

PRIOR ART

Fig. 3

a

b

c

# Fig. 4 a

b

c

d

Fig. 5 a

Fig. 5 b

EP 0 467 054 B1

Fig. 5c

33

# Fig. 5d

Fig. 6a

Fig. 6b

$(N-3N')/2$

$(N-3Ns)/2$

R

S

$(N-N')/2$

0

m'

$(N-Ns)/2$

$(N-No)/2$

70

$N/2$

71

$n = N/2$

$(N+No)/2$

72

$(N+N')/2$

$m' = M'$

$m' = (3M' + Ms)/2$

n

EP 0 467 054 B1

Fig. 7

Fig. 8

a

b

EP 0 467 054 B1

| DIVIDING CIRCUIT (TYPE 1) | → | ENCODER | → | CODED SIGNAL AMOUNT CALCULATOR | → | |
|---|---|---|---|---|---|---|
| 911 | | 921 | | 931 | | |
| DIVIDING CIRCUIT (TYPE 2) | → | ENCODER | → | CODED SIGNAL AMOUNT CALCULATOR | → | D E C I S I O N   C I R C U I T |
| 912 | | 922 | | 932 | | 941 |
| DIVIDING CIRCUIT (TYPE n) | → | ENCODER | → | CODED SIGNAL AMOUNT CALCULATOR | → | |
| 91n | | 92n | | 93n | | |

Fig. 9a

EP 0 467 054 B1

Fig. 9 b

# Fig. 10 a

WINDOW FUNCTION GEN. CKT — 17

$h_{AM}(m)$     $h_{BN}(n)/(m)$

$X_p(m,n)$

18   19

11(Mp× Np)

12( Mp× Np)

10(2)

COEFFICIENTS MEMORY

COEFFICIENTS MEMORY

10(1)

11(1)

12(1)

14(1)

ADDRESS GEN. CKT

ADDRESS GEN. CKT

13(1)

13( Mp× Np)

14( Mp× Np)

10( Mp× Np)

BLOCK SIZE

BLOCK INFORMATION

15   BLOCK INFORMATION DECODER

SELECTION

SELECTOR   16

2

X (m',n')

EP 0 467 054 B1

# Fig. 10 b

Fig. 11a

EP 0 467 054 B1

Fig. 11 b

EP 0 467 054 B1

## Fig. 12

| REGIONS | COUNTER 34 OUTPUT |
|---|---|
| $m < (M-M_o)/2$ | 0000 |
| $(M-M_o)/2 \leqq m < (M+M_o)/2$ | 0001 |
| $(M+M_o)/2 \leqq m < (3M-M_o)/2$ | 0010 |
| $(3M-M_o)/2 \leqq m < (3M+M_o)/2$ | 0011 |
| $(3M+M_o)/2 < m$ | 0100 |

## Fig. 13

| ADDRESS | ROM 35 OUTPUT |
|---|---|
| M | $h_{AM}(m)$  $(m < (M-M_o)/2)$ |
| M + 1 | $h_{AM}(m)$  $((M-M_o)/2 \leqq m < (M+M_o)/2)$ |
| M + 2 | $h_{AM}(m)$  $((M+M_o)/2 \leqq m < (3M-M_o)/2)$ |
| M + 3 | $h_{AM}(m)$  $((3M-M_o)/2 \leqq m < (3M+M_o)/2)$ |
| M + 4 | $h_{AM}(m)$  $((3M+M_o)/2 < m)$ |

EP 0 467 054 B1

Fig. 14